(19) Europäisches Patentamt
European Patent Office
Office européen des brevets

(11) EP 2 989 149 B1

(12) **FASCICULE DE BREVET EUROPEEN**

(45) Date de publication et mention de la délivrance du brevet:
**25.01.2017 Bulletin 2017/04**

(21) Numéro de dépôt: **14720543.9**

(22) Date de dépôt: **22.04.2014**

(51) Int Cl.:
***C08J 5/22*** *(2006.01)* ***C08F 259/08*** *(2006.01)*
***C08K 3/34*** *(2006.01)* ***C08L 27/22*** *(2006.01)*
***C08F 2/46*** *(2006.01)* ***C08F 8/42*** *(2006.01)*
***H01M 8/10*** *(2016.01)* ***B01D 67/00*** *(2006.01)*
***B01D 69/14*** *(2006.01)* ***C08L 51/00*** *(2006.01)*

(86) Numéro de dépôt international:
**PCT/EP2014/058116**

(87) Numéro de publication internationale:
**WO 2014/173885 (30.10.2014 Gazette 2014/44)**

(54) **PROCEDE DE PREPARATION D'UN MATERIAU COMPOSITE ECHANGEUR D'IONS COMPRENANT UNE MATRICE POLYMERE SPECIFIQUE ET UNE CHARGE CONSISTANT EN DES PARTICULES ECHANGEUSES D'IONS**

VERFAHREN ZUR HERSTELLUNG EINES IONENAUSTAUSCHVERBUNDSTOFFS MIT EINER SPEZIFISCHEN POLYMERMATRIX UND EINEM FÜLLSTOFF AUS IONENAUSTAUSCHPARTIKELN

PROCESS FOR PREPARING AN ION-EXCHANGE COMPOSITE MATERIAL COMPRISING A SPECIFIC POLYMER MATRIX AND A FILLER CONSISTING OF ION-EXCHANGE PARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.04.2013 FR 1353712**

(43) Date de publication de la demande:
**02.03.2016 Bulletin 2016/09**

(73) Titulaires:
- **Commissariat à l'Énergie Atomique et aux Énergies Alternatives 75015 Paris (FR)**
- **Institut National Des Sciences Appliquees 69621 Villeurbanne Cedex (FR)**
- **Arkema France 92700 Colombes (FR)**

(72) Inventeurs:
- **GERARD, Jean-François F-69500 Bron (FR)**
- **BOUNOR LEGARE, Véronique F-69006 Lyon (FR)**
- **SECK, Sérigne F-67300 Schiltigheim (FR)**
- **BUVAT, Pierrick F-37260 Monts (FR)**
- **BIGARRE, Janick F-37000 Tours (FR)**
- **BLONDEL, Benoît F-37170 Chambray-les-tours (FR)**
- **CHAUVEAU, Jérôme F-27410 Landepereuse (FR)**

(74) Mandataire: **Brevalex 95, rue d'Amsterdam 75378 Paris Cedex 8 (FR)**

(56) Documents cités:
**WO-A1-2011/121078 WO-A2-2007/073500**
**WO-A2-2011/157727**

- **R. K. NAGARALE ET AL: "Organic-Inorganic Hybrid Membrane: Thermally Stable Cation-Exchange Membrane Prepared by the Sol-Gel Method", MACROMOLECULES, vol. 37, no. 26, 23 novembre 2004 (2004-11-23), pages 10023-10030, XP055074926, ISSN: 0024-9297, DOI: 10.1021/ma048404p**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

**(Cont. page suivante)**

- XIAOKAI BIAN ET AL: "Effect of Nano-TiO 2 Particles on the Performance of PVDF, PVDF- g -(Maleic anhydride), and PVDF- g -Poly(acryl amide) Membranes", INDUSTRIAL & ENGINEERING CHEMISTRY RESEARCH, vol. 50, no. 21, 2 novembre 2011 (2011-11-02), pages 12113-12123, XP055074927, ISSN: 0888-5885, DOI: 10.1021/ie200232u

## Description

### DOMAINE TECHNIQUE

La présente invention a trait à un procédé de préparation d'un matériau composite échangeur d'ions comprenant une matrice polymère spécifique et une charge consistant en des particules inorganiques échangeuses d'ions.

Ces matériaux préparés selon le procédé de l'invention peuvent trouver une application dans les domaines nécessitant un échange d'ions, comme cela est le cas de la purification d'effluents et de l'électrochimie ou dans les domaines de l'énergie.

En particulier, ces matériaux composites peuvent trouver leur application dans la conception des membranes de piles à combustible, telles que des membranes conductrices de protons pour des piles à combustible fonctionnant avec $H_2$/air ou $H_2/O_2$ (ces piles étant connues sous l'abréviation PEMFC pour « Proton Exchange Membrane Fuel Cell ») ou fonctionnant au méthanol/air (ces piles étant connues sous l'abréviation DMFC pour « Direct Methanol Fuel Cell »).

Un des domaines techniques généraux de l'invention peut être ainsi défini comme étant celui des piles à combustible et des membranes conductrices de protons.

### ÉTAT DE LA TECHNIQUE ANTÉRIEURE

Une pile à combustible est un générateur électrochimique, qui convertit l'énergie chimique d'une réaction d'oxydation d'un combustible en présence d'un comburant en énergie électrique, en chaleur et en eau.

Généralement, une pile à combustible comporte une pluralité de cellules électrochimiques montées en série, chaque cellule comprenant deux électrodes de polarité opposée séparées par une membrane échangeuse de protons faisant office d'électrolyte solide.

La membrane assure le passage vers la cathode des protons formés lors de l'oxydation du combustible à l'anode.

Les membranes structurent le coeur de la pile et doivent, par conséquent, présenter de bonnes performances en matière de conduction protonique, ainsi qu'une faible perméabilité aux gaz réactants ($H_2$/air ou $H_2/O_2$ pour les piles PEMFC et méthanol/air pour les piles DMFC). Les propriétés des matériaux constituant les membranes sont essentiellement la stabilité thermique, la résistance à l'hydrolyse et à l'oxydation ainsi qu'une certaine flexibilité mécanique.

Des membranes utilisées couramment et remplissant ces exigences sont des membranes obtenues à partir de polymères appartenant, par exemple, à la famille des polysulfones, des polyéthercétones, des polyphénylènes, des polybenzimidazoles. Toutefois, il a été constaté que ces polymères non fluorés se dégradent relativement rapidement dans un environnement de pile à combustible et leur durée de vie reste, pour le moment, insuffisante pour l'application PEMFC.

Des membranes présentant des propriétés plus importantes en matière de durée de vie sont des membranes obtenues à partir de polymères constitués d'une chaîne principale linéaire perfluorée et de chaînes latérales porteurs d'un groupe acide, tel que des groupes acide sulfonique. Parmi les plus connues, on peut citer les membranes commercialisées sous la dénomination NAFION® par la société Dupont de Nemours ou sous la dénomination Dow®, FLEMION® ou Aciplex® par les sociétés Dow Chemicals et Asahi Glass, ou encore Aquivion® produit par Solvay. Ces membranes présentent de bonnes performances électrochimiques et une durée de vie intéressante mais néanmoins insuffisante pour les applications PEMFC. De plus, leur coût (plus de 300 euros/$m^2$) reste prohibitif pour la commercialisation. Pour les applications DMFC, elles présentent une perméabilité au méthanol élevée, ce qui limite également leur utilisation avec ce type de combustible. Qui plus est, les monomères les constituant présentent une structure de type hydrophile/hydrophobe, qui les rend particulièrement sensibles aux phénomènes d'hydratation et de déshydratation. Ainsi, leur température de fonctionnement se situe typiquement vers 80°C, puisque au-delà les instabilités d'hydratation vieillissent prématurément les membranes.

Pour obtenir une efficacité à long terme en en matière de conduction protonique à des températures supérieures à 80°C, certains auteurs ont axé leur recherche sur la conception de matériaux plus complexes comprenant en plus d'une matrice polymère des particules conductrices de protons, la conductivité n'étant ainsi plus uniquement dévolue au(x) polymère(s) constitutif(s) des membranes. De ce fait, il est ainsi possible d'utiliser un plus large panel de polymères pour entrer dans la constitution de la membrane.

Des matériaux de ce type peuvent être des matériaux composites comprenant une matrice polymère et une charge consistant en des particules inorganiques, telles que des particules d'argile, greffées par des groupes échangeurs d'ions.

Classiquement, ces matériaux sont préparés par deux grandes voies de synthèse : la voie utilisant un solvant et la voie mettant en jeu des éléments (en l'occurrence, ici, polymère et particules) à l'état fondu (appelée, par la suite, voie fondue).

La voie utilisant un solvant consiste à mettre en contact le polymère et les particules inorganiques dans un solvant. Le mélange résultant est ensuite coulé par enduction sur un substrat puis le solvant est laissé à évaporer.

Cette voie de synthèse présente l'avantage d'être très simple d'utilisation et de ne pas nécessiter d'appareillage sophistiqué. Toutefois, lorsqu'elle est destinée à être mise en oeuvre à grande échelle, cette voie pose des difficultés de gestion quant aux volumes de solvant utilisé et des problèmes de sécurité inhérents aux vapeurs de solvant qui peuvent être toxiques voire cancérigènes. Quant au matériau composite obtenu, il est difficile d'obtenir une bonne densité de ce dernier, lié notamment au phénomène d'évaporation de solvant qui engendre une structure de matériau difficile à contrôler.

La voie fondue consiste, quant à elle, en la transformation des éléments précurseurs du matériau composite (à savoir, le ou les polymères et les particules) initialement solides en mélange fondu. Pour ce faire, les particules sont classiquement introduites par dispersion mécanique dans le polymère fondu. Toutefois, cette technique présente, entre autres, la difficulté d'obtenir une dispersion fine et homogène des particules inorganiques dans le ou les polymères susmentionnés. Il s'ensuit ainsi un matériau présentant des propriétés échangeuses d'ions non uniformes, notamment en raison de la concentration de particules par percolation à certains endroits du matériau final obtenu.

Qui plus est, que ce soit par la voie solvant ou la voie fondue, il est difficile d'obtenir des matériaux présentant une forte proportion de particules inorganiques échangeuses d'ions dans la matrice polymère.

Ainsi il existe un véritable besoin pour un nouveau procédé de préparation d'un matériau composite comprenant, dans une matrice, une dispersion de particules inorganiques échangeuses d'ions, pouvant être mis en oeuvre, par exemple, pour la conception de membranes échangeuses de protons de pile à combustible, qui permettrait, entre autres :

- d'obtenir, dans le matériau résultant, une distribution homogène des particules dans la matrice polymère et, ainsi, une homogénéité quant aux propriétés échangeuses d'ions ;
- d'obtenir, dans le matériau résultant, lorsque cela est souhaité, d'importantes proportions de particules inorganiques échangeuses d'ions dans la matrice polymère.

La demande internationale WO 2011/157727 A2 décrit un procédé pour réaliser une membrane conductrice de protons pour les piles à combustible, comprenant une matrice polymérique et une charge consistant en des particules inorganiques échangeuses d'ions réalisées au sein de la matrice polymérique par la méthode sol-gel.

L'article de R. K. Nagarale et al. 2004 (MACROMOLECULES, vol. 37, pages 10023-10030) décrit une membrane électrolytique hybride à base d'un alcool polyvinylique et des particules de silice comprenant de groupes sulfonique.

La demande internationale WO 2007/073500 A2 décrit des membranes hybrides comprenant des charges inorganiques comprenant des groupes échangeurs d'ions telles que le phosphate de métal et une matrice polymère comprenant un polymère fluoré ayant une chaîne latérale sulfonée.

La demande internationale WO 2011/121078 A1 décrit un composé, qui peut être utilisé aussi comme membrane conductrice de protons pour les piles à combustible, obtenu par l'hydrolyse et la polycondensation d'un composé (M) ayant des groupes fonctionnels au sein d'une matrice comprenant un copolymère fluoré ayant des motifs récurrents issus d'au moins un monomère (méth)acrylique.

L'article de Xiaokai Bian et al. 2011 (INDUSTRIAL & ENGINEERING CHEMISTRY RESEARCH, vol. 50, pages 12113-12123) décrit des membranes hybrides comprenant des charges d'oxyde de titane et une matrice polymère fluorée comprenant un copolymère comprenant au moins deux types de motifs répétitifs fluorés, dont un type est porteur d'au moins un groupe pendant anhydride maléique.

## EXPOSÉ DE L'INVENTION

Pour pallier les inconvénients susmentionnés, les inventeurs ont mis au point un procédé innovant et inventif de synthèse d'un matériau composite dont les propriétés échangeuses d'ions sont conférées en tout ou partie par des particules inorganiques.

L'invention a ainsi trait à un procédé de préparation d'un matériau composite comprenant une matrice polymère fluorée et une charge consistant en des particules inorganiques échangeuses d'ions comprenant une étape de synthèse *in situ* desdites particules au sein de la matrice polymère fluorée, ladite matrice comprenant au moins un premier copolymère consistant en un copolymère comprenant au moins deux types de motifs répétitifs fluorés, dont un type est porteur d'au moins un groupe pendant anhydride maléique.

En procédant de la sorte, l'on s'affranchit des inconvénients suivants :

- les problèmes de mélange entre les particules inorganiques et le ou les (co)polymères constitutifs de la matrice polymère ;
- les problèmes de répartition inhomogène de ces particules au sein du ou des (co)polymères ;
- les problèmes d'anisotropie quant aux propriétés échangeuses d'ions rencontrées dans les modes de réalisation de l'art antérieur, du fait des problèmes de mélange et de répartition, notamment lorsque les particules s'organisent en macro-domaines au sein de la matrice polymère, ce qui ne permet pas d'assurer un chemin continu pour le

transport protonique,

ces problèmes étant résolus par le fait que les particules sont générées *in situ* au sein de la matrice grâce à la présence d'un premier copolymère spécifique tel que défini ci-dessus, qui remplit la fonction d'agent compatibilisant ce qui permet à ces particules de s'organiser en micro-domaines.

Plus spécifiquement, le premier copolymère tel que défini ci-dessus contribue à réduire la différence d'énergie de surface entre les particules inorganiques constitutives de la phase inorganique très hydrophile et la matrice polymère.

Avant d'entrer plus en détail, on précise les définitions suivantes.

Par «étape de synthèse *in situ*», on entend une étape de synthèse réalisée au sein même de la matrice polymère, ce qui signifie en d'autres termes que les particules inorganiques ne préexistent pas en dehors de la matrice polymère généralement hydrophobe.

Par particules inorganiques échangeuses d'ions, on entend des particules inorganiques à la surface desquelles sont liés un ou plusieurs groupes organiques échangeurs d'ions.

Il peut s'agir de particules d'oxyde fonctionnalisées par des groupes échangeurs d'ions, telles que des particules de silice fonctionnalisées par des groupes échangeurs d'ions.

Par motif répétitif fluoré, on entend un motif répétitif dont les atomes de carbone sont porteurs d'un ou plusieurs atomes de fluor, ce qui n'exclut pas que ces atomes de carbone puissent contenir d'autres atomes que le fluor, tels que, par exemple, des atomes d'hydrogène.

Quel que soit le mode de réalisation mis en oeuvre, la matrice peut être constituée uniquement dudit premier copolymère ou peut comprendre au moins un autre (co)polymère distinct dudit premier copolymère, ce (co)polymère distinct appartenant, avantageusement, à la famille des (co)polymères thermofusibles et plus particulièrement, des (co)polymères présentant, avantageusement une température de transition vitreuse ou une température de fusion allant classiquement de 100 à 350°C.

En particulier, ce (co)polymère distinct peut être choisi parmi les (co)polymères thermoplastiques, tels que les (co)polymères thermoplastiques fluorés.

Il peut s'agir notamment de (co)polymères thermoplastiques fluorés non échangeurs d'ions, tels qu'un (co)polymère comprenant au moins un type de motifs répétitifs issus d'un monomère fluoré, par exemple, les polytétrafluoréthylènes (connu sous l'abréviation PTFE), les polyfluorures de vinylidène (connu sous l'abréviation PVDF), les copolymères d'éthylène fluoré-propylène (connu sous l'abréviation FEP), les copolymères d'éthylène et de tétrafluoroéthylène (connu sous l'abréviation ETFE) ou tels qu'un copolymère comprenant au moins deux types de motifs répétitifs issus de monomères fluorés, par exemple un copolymère de fluorure de vinylidène et d'hexafluoropropène (connu sous l'abréviation PVDF-HFP), et les mélanges de ceux-ci.

Il peut s'agir également de (co)polymères thermoplastiques fluorés échangeurs d'ions, tels que des (co)polymères perfluorés sulfonés. On précise que, par (co)polymères perfluorés sulfonés, on entend des (co)polymères comprenant une chaîne principale linéaire perfluorée et des chaînes latérales porteurs de groupements acide sulfonique. De tels (co)polymères sont notamment disponibles dans le commerce sous la marque déposée NAFION® par la société Dupont de Nemours, ou ACIPLEX-S® de la société Asahi Chemical ou encore Aquivion® de la société Solvay.

Les (co)polymères fluorés, du fait de la présence de liaisons -C-F stables (avec une énergie de liaison de 485 kJ/mol), constituent des (co)polymères présentant d'excellentes propriétés et caractéristiques, telles que l'anti-adhérence, la résistance à l'abrasion, la résistance à la corrosion, la résistance aux attaques chimiques et à la température.

Avantageusement, le procédé de l'invention peut être mis en oeuvre, avec une matrice comprenant, outre ledit premier copolymère, un copolymère du type PVDF-HFP intéressant pour la stabilité de son squelette fluoré, son faible coût de production.

L'étape de synthèse *in situ* des particules inorganiques peut être réalisée par la méthode sol-gel, c'est-à-dire que des précurseurs desdites particules subissent une opération d'hydrolyse-condensation au sein même du matériau.

Selon une première variante, l'étape de synthèse peut comprendre les opérations suivantes :

- une opération de mise en contact du premier copolymère et, le cas échéant, du ou des (co)polymères distincts constitutifs de la matrice avec un ou plusieurs précurseurs des particules inorganiques, le ou lesdits précurseurs répondant à la formule (I) suivante :

$$(X)_{y-n}\text{-M-}(R)_n \qquad (I)$$

dans laquelle :

*M est un élément métallique ou un élément métalloïde ;
*X est un groupe chimique hydrolysable ;
*R est un groupe chimique échangeur d'ions ou un groupe précurseur d'un groupe chimique échangeur d'ions ;

*y correspond à la valence de l'élément M ; et
*n est un entier allant de 0 à (y-1) ;

- une opération d'hydrolyse-condensation du ou desdits précurseurs, moyennant quoi l'on obtient des particules inorganiques résultant de l'hydrolyse-condensation desdits précurseurs ;
- dans le cas où R est un groupe précurseur d'un groupe chimique échangeur d'ions, une opération de transformation du groupe précurseur en un groupe chimique échangeur d'ions ou, dans le cas où n=0, une opération de fonctionnalisation desdites particules par des groupes chimiques échangeurs d'ions.

L'opération d'hydrolyse-condensation peut consister à chauffer le mélange issu de l'étape de mise en contact à une température efficace, par exemple, à une température allant de 150 à 300°C pour engendrer ladite opération d'hydrolyse-condensation, éventuellement en présence d'un catalyseur.

L'étape de synthèse *in situ* réalisée selon la première variante présente les avantages suivants :

- une bonne miscibilité entre les précurseurs, le premier copolymère et, le cas échant, le ou les (co)polymères distincts entrant dans la constitution de la matrice ce qui permet, au final, si souhaité, d'accéder à de fortes proportions de particules inorganiques dans la matrice ;
- l'absence d'utilisation de solvants organiques, classiquement utilisés dans les procédés de préparation des matériaux composites du type de l'invention, ce qui permet de s'affranchir des problèmes récurrents de toxicité et de porosité inhérents à l'utilisation de solvant organique.

Pour éviter l'utilisation d'un catalyseur et les problèmes pouvant être engendrés par une mauvaise dispersion de ce catalyseur lors de l'étape de mise en contact, il est proposé, selon l'invention, de réaliser l'étape de synthèse *in situ* des particules inorganiques, selon une deuxième variante, laquelle étape est réalisée par une méthode sol-gel comprenant les opérations suivantes :

- une opération d'hydrolyse d'un ou plusieurs précurseurs de particules inorganiques de formule (I) suivante :

$$(X)_{y-n}\text{-}M\text{-}(R)_n \qquad (I)$$

dans laquelle :

*M est un élément métallique ou un élément métalloïde;
*X est un groupe chimique hydrolysable ;
*R est un groupe chimique échangeur d'ions ou un groupe précurseur d'un groupe chimique échangeur d'ions ;
*y correspond à la valence de l'élément M ; et
*n est un entier allant de 0 à (y-1) ;

- une opération de mise en contact de l'hydrolysat obtenu à l'étape précédente avec le premier copolymère et, le cas échant, le ou les (co)polymères distincts entrant dans la constitution de la matrice tels que définis ci-dessus ;
- une opération de chauffage du mélange résultant à une température efficace pour engendrer une transformation de l'hydrolysat en particules inorganiques ;
- dans le cas où R est un groupe précurseur d'un groupe chimique échangeur d'ions, une opération de transformation du groupe précurseur en un groupe chimique échangeur d'ions ou, dans le cas où n=0, une opération de fonctionnalisation desdites particules par des groupes chimiques échangeurs d'ions.

L'opération d'hydrolyse susmentionnée peut consister à mettre en contact lesdits précurseurs avec une solution aqueuse acide comprenant éventuellement un ou plusieurs solvants alcooliques.

Ainsi, à titre d'exemple, on peut mettre en contact lesdits précurseurs avec une quantité d'eau, de sorte à atteindre un rapport molaire entre les fonctions hydrolysables des précurseurs et le nombre de moles d'eau compris généralement entre 0,001 et 1000, de préférence entre 0,1 et 10.

L'addition d'eau peut conduire, en fonction des précurseurs utilisés, à une démixtion de phases du fait d'un problème de miscibilité entre l'eau et les précurseurs. Ainsi, il peut être utile d'ajouter un solvant alcoolique en des proportions déterminées (par exemple, du méthanol, de l'éthanol, du propanol), afin d'améliorer la miscibilité des précurseurs dans l'eau. Généralement, le solvant alcoolique peut être ajouté en respectant un rapport massique avec l'eau allant jusqu'à 100, en particulier étant compris entre 0 et 1. Qui plus est, pour activer l'hydrolyse, il peut être avantageux d'acidifier la solution, de sorte à obtenir une solution résultante présentant, avantageusement, un pH inférieur à 2. Cette acidification peut être réalisée par l'ajout à la solution d'un acide, tel que l'acide chlorhydrique, l'acide sulfurique, l'acide

nitrique ou un acide organique, tel que l'acide méthanesulfonique.

Une fois l'opération d'hydrolyse effectuée, l'hydrolysat est ajouté au premier copolymère et, le cas échant, au ou aux (co)polymères distincts entrant dans la constitution de la matrice suivi d'une opération de chauffage à une température efficace pour transformer l'hydrolysat en particules inorganiques.

Cette température peut être aisément déterminée par l'homme du métier en pratiquant des essais à différentes températures jusqu'à trouver une température à laquelle l'hydrolysat donne naissance à des particules inorganiques.

Que ce soit pour la première variante ou la seconde variante, l'élément métallique M peut être choisi dans un groupe constitué par les métaux de transition, les métaux lanthanides et les métaux dits post-transitionnels des colonnes IIIA et IVA de la classification périodique des éléments. En particulier, l'élément métallique de transition peut être choisi parmi Ti, V, Cr, Mn, Fe, Co, Ni, Cu, Zn, Y, Zr, Nb, Mo, Ru, Rh, Pd, Ag, Cd, Hf, Ta, W, Re, Os, Ir, Pt). En particulier, l'élément lanthanide peut être choisi parmi La, Ce, Pr, Nd, Sm, Eu, Gd, Tb, Dy, Er, Yb. En particulier, l'élément métallique post-transitionnel peut être choisi parmi les éléments de la colonne IIIA de la classification périodique, tels Al, Ga, In et Tl et les éléments de la colonne IVA de la classification périodique, tels Ge, Sn et Pb.

L'élément métalloïde M peut être choisi parmi Si, Se, Te.

Avantageusement, M peut être un élément choisi parmi Si, Ti et Al, en particulier, Si.

Le groupe X hydrolysable doit être, avantageusement, un bon groupe partant lors de l'opération d'hydrolyse-condensation mentionnée ci-dessus.

Ce groupe X peut être, par exemple, un atome d'halogène, un groupe acrylate, un groupe acétonate, un groupe alcoolate de formule -OR', un groupe amine secondaire ou tertiaire, dans laquelle R' représente un groupe alkyle comprenant, par exemple, de 1 à 10 atomes de carbone, en particulier, un groupe éthyle.

De préférence, X est un groupe -OR' tel que défini ci-dessus, ou un atome d'halogène.

Lorsque le groupe R est un groupe chimique échangeur d'ions, il peut s'agir d'un groupe chimique échangeur de cations (par exemple, échangeur de protons) ou d'un groupe chimique échangeur d'anions.

Le groupe R peut être un groupe de formule $-R^2-Z$, dans laquelle $R^2$ est une liaison simple, un groupe alkylène, linéaire ou ramifié, comprenant de 1 à 30 atomes de carbone, de préférence de 1 à 10 atomes de carbone et éventuellement dont un ou plusieurs atomes d'hydrogène sont substitués par un atome d'halogène, tel que du fluor ou $R^2$ est un groupe hydrocarboné cyclique, et Z est un groupe chimique échangeur d'ions.

En particulier, lorsqu'il est un groupe échangeur de cations, le groupe R peut être un groupe de formule $-R^2-Z^1$, dans laquelle :

- $R^2$ est une liaison simple, un groupe alkylène, linéaire ou ramifié, comprenant, par exemple, de 1 à 30 atomes de carbone, de préférence de 1 à 10 atomes de carbone, et éventuellement dont un ou plusieurs atomes d'hydrogène sont substitués par un atome d'halogène, tel que du fluor ou $R^2$ est un groupe hydrocarboné cyclique, tel qu'un groupe aromatique ou hétérocyclique ;
- $Z^1$ est un groupe $-SO_3H$, $-PO_3H_2$, $-CO_2H$, éventuellement sous forme de sels.

On précise que, par sel, on entend classique un groupe $-SO_3X$, $-PO_3X_2$ ou $-CO_2X$ où X représente un cation.

A titre d'exemple, $R^2$ peut être un groupe perfluoroalkylène, tel qu'un groupe $-CF_2-$.

Lorsqu'il est un groupe échangeur d'anions, le groupe R peut être un groupe de formule $-R^2-Z^2$, dans laquelle :

- $R^2$ est une liaison simple, un groupe alkylène, linéaire ou ramifié, comprenant, par exemple, de 1 à 30 atomes de carbone, de préférence de 1 à 10 atomes de carbone, et éventuellement dont un ou plusieurs atomes d'hydrogène sont substitués par un atome d'halogène, tel que du fluor, ou $R^2$ est un groupe hydrocarboné cyclique, tel qu'un groupe aromatique ou hétérocyclique ;
- $Z^2$ est un groupe amine, éventuellement sous forme d'un sel (auquel cas on parlera de groupe ammonium), un groupe phosphonium ou un groupe sulfonium.

On précise que, par groupe phosphonium, on entend classiquement un groupe comprenant un atome de phosphore chargé positivement, ce groupe pouvant être issu de la réaction d'un composé phosphine (tel que la triphénylphosphine) avec un halogénure d'alkyle ou un alcool benzylique.

On précise que, par groupe sulfonium, on entend classiquement un groupe comprenant un atome de soufre chargé positivement, ce groupe pouvant être issu de la réaction d'un composé thioester avec un halogénure d'alkyle.

A titre d'exemple, $R^2$ peut être un groupe perfluoroalkylène, tel qu'un groupe $-CF_2-$.

Il est précisé ci-dessus que le groupe R peut être également un groupe chimique précurseur d'un groupe échangeur d'ions.

Par groupe chimique précurseur d'un groupe échangeur d'ions, on entend classiquement un groupe apte à être transformé par une réaction chimique appropriée en ledit groupe échangeur d'ions.

Un tel groupe R peut être un groupe de formule $-R^2-Z^3$, dans laquelle :

- $R^2$ est une liaison simple, un groupe alkylène, linéaire ou ramifié, comprenant, par exemple, de 1 à 30 atomes de carbone, de préférence de 1 à 10 atomes de carbone et éventuellement dont un ou plusieurs atomes d'hydrogène sont substitués par un atome d'halogène, tel que du fluor, ou $R^2$ est un groupe hydrocarboné cyclique, par exemple, un groupe aromatique ou hétérocyclique ;
- $Z^3$ est un groupe précurseur d'un groupe $Z^1$ ou d'un groupe $Z^2$ tel que mentionné ci-dessus.

Lorsque l'on utilise un précurseur de ce type (à savoir un précurseur comprenant un groupe précurseur d'un groupe échangeur d'ions), il est nécessaire d'engager une opération de transformation du groupe précurseur en un groupe chimique échangeur d'ions.

Ainsi, lorsque le groupe $Z^1$ est un groupe $-SO_3H$ éventuellement sous forme de sel, le groupe $-Z^3$ peut être un groupe thiol -SH, qui va subir une opération de transformation consistant à le soumettre à une oxydation par de l'eau oxygénée suivie d'une acidification par de l'acide sulfurique concentré.

Lorsque le groupe $Z^1$ est un groupe $-CO_2H$ éventuellement sous forme de sel, le groupe $-Z^3$ peut être un groupe ester ou un groupe chlorure d'acide susceptible d'être transformé en groupe $-CO_2H$ éventuellement sous forme de sel par hydrolyse.

Les précurseurs susmentionnés peuvent être avantageusement des alcoxysilanes ou halogénosilanes (auquel cas M est Si et X est un groupe -OR' ou un atome d'halogène) comprenant au moins un groupe R tel que défini ci-dessus.

Des précurseurs répondant à cette spécificité peuvent être ainsi des précurseurs répondant à la formule (II) suivante :

$$(OR')_{4-n}\text{-Si-}(R)_n \qquad \text{(II)}$$

dans laquelle :

- R' est tel que défini ci-dessus ;
- R correspond à la formule $-R^2-Z^3$, $R^2$ étant un groupe alkylène, linéaire ou ramifié, comprenant de 1 à 30 atomes de carbone, de préférence de 1 à 10 atomes de carbone, et éventuellement dont un ou plusieurs atomes d'hydrogène sont substitués par un atome d'halogène, tel que du fluor et $Z^3$ est un groupe précurseur d'un groupe $Z^1$ ou d'un groupe $Z^2$ tel que mentionné ci-dessus ;
- n est un entier allant de 1 à 3.

Par exemple, $Z^3$ peut être un groupe thiol.

On peut citer, à titre d'exemple, le mercaptopropyltriéthoxysilane de formule $HS-(CH_2)_3-Si(OCH_2CH_3)_3$.

Lorsque, pour les précurseurs susmentionnés, n est égal à 0, il est nécessaire, en fin de procédé, de réaliser une opération de fonctionnalisation desdites particules par introduction sur lesdites particules de groupes chimiques échangeurs d'ions.

Les réactions appropriées de fonctionnalisation seront choisies par l'homme du métier en fonction du matériau obtenu et désiré. Il peut s'agir, par exemple, de réactions de substitution sur des noyaux aromatiques, d'additions sur des liaisons insaturées, d'oxydation de groupes oxydables, la résultante de ces réactions ayant pour conséquence le greffage par covalence aux particules de groupes échangeurs d'ions.

Les précurseurs susmentionnés, quelle que soit la variante utilisée, et en particulier pour la deuxième variante, peuvent être utilisés en combinaison avec un précondensat comprenant des unités répétitives de formule (III) suivante :

$$-\!\!\left( M(X)_{y-2} \right)\!\!-$$

(III)

dans laquelle :

- M est un élément métallique ou métalloïde tel que défini ci-dessus ;
- X est un groupe tel que défini ci-dessus ;
- y correspond à la valence de l'élément métallique ou métalloïde.

En particulier, X peut correspondre à un groupe -OR' avec R' étant tel que défini ci-dessus.

A titre d'exemple, il peut s'agir ainsi d'un précondensat de diméthoxysilane comprenant des motifs répétitifs de formule (IV) suivante :

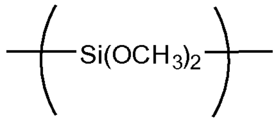

(IV)

Les précondensats peuvent permettre d'assurer la structuration des particules inorganiques, par exemple en augmentant leur cohésion.

Les taux massiques entre les précurseurs susmentionnés et les précondensats seront adaptés de manière à obtenir le meilleur compromis entre structuration et fonctionnalisation.

A titre d'exemple, le rapport massique (précurseur/précondensat) peut être compris entre 0,01 et 50 et plus généralement entre 0,1 et 20.

Quel que soit le mode de réalisation envisagé, le rapport massique des précurseurs susmentionnées (éventuellement en combinaison avec au moins un précondensat tel que défini ci-dessus) par rapport au(x) (co)polymère(s) constitutif(s) de la matrice peut aller jusqu'à 80%, avantageusement de 5 à 50%.

Le premier copolymère, utilisé comme agent agent compatibilisant consiste en un copolymère comprenant au moins deux types de motifs répétitifs fluorés, dont un type est porteur d'au moins un groupe pendant anhydride maléique.

De manière plus spécifique, le premier copolymère peut consister en un copolymère comprenant, outre le motif répétitif fluoré porteur d'un groupe pendant anhydride maléique, un motif répétitif répondant à la formule (V) suivante :

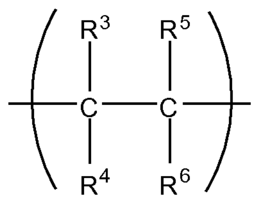

(V)

dans laquelle $R^3$, $R^4$, $R^5$ et $R^6$ représentent, indépendamment l'un de l'autre, un atome d'hydrogène, un atome d'halogène, un groupe perfluoroalkyle ou un groupe perfluoroalcoxy, à condition que l'un au moins des groupes $R^3$ à $R^6$ représente un atome de fluor, un groupe perfluoroalkyle ou un groupe perfluoroalcoxy, auquel cas le monomère fluoré éthylénique permettant l'obtention de ce motif répétitif est un monomère de formule (VI) suivante :

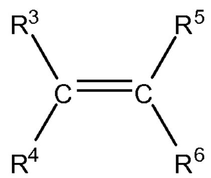

(VI)

les $R^3$ à $R^6$ étant tels que définis ci-dessus.

Par groupe perfluoroalkyle, on entend classiquement, dans ce qui précède et ce qui suit, un groupe alkyle dont tous les atomes d'hydrogène sont remplacés par des atomes de fluor, ce groupe répondant à la formule $-C_nF_{2n+1}$, n correspondant au nombre d'atomes de carbone, ce nombre pouvant aller de 1 à 5, un tel groupe pouvant être un groupe de formule $-CF_3$.

Par groupe perfluoroalcoxy, on entend, classiquement, dans ce qui précède et ce qui suit, un groupe -O-alkyle dont tous les atomes d'hydrogène sont remplacés par des atomes de fluor, ce groupe répondant à la formule $-O-C_nF_{2n+1}$, n correspondant au nombre d'atomes de carbone, ce nombre pouvant aller de 1 à 5, un tel groupe pouvant être un groupe de formule $-O-CF_3$.

Ainsi, un motif répétitif particulier tombant sous le coup de la définition générale des motifs répétitifs de formule (V) peut correspondre à un motif répétitif de formule (VII) suivante :

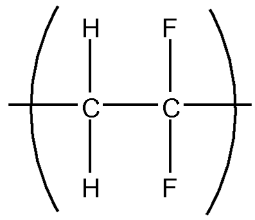

(VII)

moyennant quoi le monomère, dont est issu ce motif répétitif, répond à la formule (VIII) suivante :

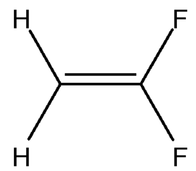

(VIII)

ce monomère étant connu sous le nom de fluorure de vinylidène.

D'autres motifs répétitifs particuliers tombant sous le coup de la définition générale des motifs répétitifs de formule (V) peuvent correspondre aux motifs particuliers suivants :

- un motif répétitif pour lequel $R^3$, $R^4$ et $R^6$ sont des atomes de fluor et $R^5$ est un atome de chlore ou de brome, auquel cas le monomère, dont est issu ce motif répétitif, est le chlorotrifluoroéthylène (connu sous l'abréviation CTFE) ou le bromotrifluoréthylène ;
- un motif répétitif pour lequel $R^3$, $R^4$ et $R^5$ sont des atomes de fluor et $R^6$ est un groupe $-CF_3$, lequel motif répétitif répondant ainsi à la formule (IX) suivante :

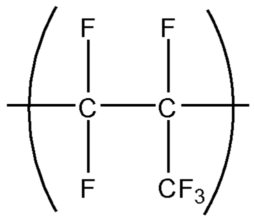

(IX)

- un motif répétitif pour lequel $R^3$, $R^4$ et $R^5$ sont des atomes de fluor et $R^6$ est un atome d'hydrogène, auquel cas le monomère, dont est issu ce motif répétitif, est trifluoroéthylène (connu sous l'abréviation TrFE) ;
- un motif répétitif pour lequel $R^3$ à $R^6$ sont des atomes de fluor, auquel cas le monomère, dont est issu ce motif répétitif, est le tétrafluoroéthylène (connu sous l'abréviation TFE) ;
- un motif répétitif pour lequel $R^3$ à $R^5$ sont des atomes de fluor et $R^6$ est un groupe $-OCF_3$;
- un motif répétitif pour lequel $R^3$ à $R^5$ sont des atomes d'hydrogène et $R^6$ est un atome de fluor ;
- un motif répétitif pour lequel $R^3$ à $R^5$ sont des atomes d'hydrogène et $R^6$ est un groupe $-CF_3$;
- un motif répétitif pour lequel $R^3$ et $R^5$ sont des atomes de fluor et $R^4$ et $R^6$ sont des atomes de chlore ;
- un motif répétitif pour lequel $R^3$ et $R^4$ sont des atomes de fluor, $R^5$ est un atome d'hydrogène et $R^6$ est un atome de brome.

De manière particulière, le premier copolymère peut consister en un copolymère comprenant, outre un motif répétitif fluoré comprenant un groupe pendant anhydride maléique, un premier type de motif répétitif de formule (VII) susmentionnée et un deuxième type de motif répétitif de formule (IX) susmentionnée.

Concernant le motif répétitif fluoré comprenant un groupe pendant anhydride maléique, celui-ci peut répondre à la formule (X) suivante :

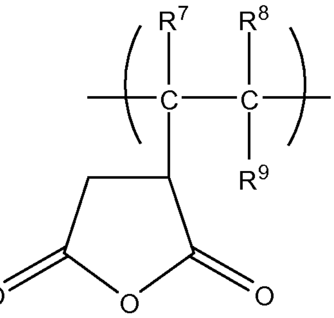

(X)

dans laquelle :

- $R^7$ à $R^9$ représentent, indépendamment l'un de l'autre, un atome d'hydrogène, un atome d'halogène, un groupe perfluoroalkyle.

Ainsi, un motif répétitif particulier tombant sous le coup de la définition générale des motifs répétitifs de formule (X) peut correspondre à un motif répétitif de formule (XI) suivante :

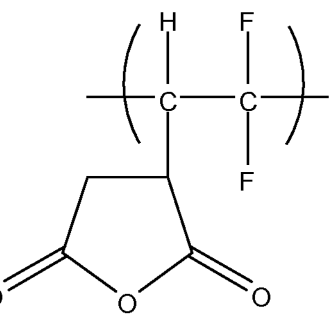

(XI)

Un premier copolymère spécifique conforme à la définition de l'invention est un copolymère comprenant un premier type de motif répétitif de formule (VII) susmentionnée, un deuxième type de motif répétitif de formule (IX) susmentionnée et un troisième type de motif répétitif de formule (XI) susmentionnée. Plus spécifiquement, ce copolymère peut comprendre, avantageusement, une teneur massique en motif de formule (IX) susmentionnée allant de 3 à 35% massique, de préférence de 13 à 18% massique par rapport à la masse totale du copolymère.

Avantageusement, selon l'invention, le premier copolymère peut comprendre un ou plusieurs motifs répétitifs (par exemple, ceux de formules (VII) et (IX) susmentionnées) de formule(s) identique(s) à celle(s) des motifs répétitifs, le cas échéant, du ou des (co)polymères distincts entrant dans la constitution de la matrice polymère fluorée.

Plus spécifiquement, lorsque la matrice polymère fluorée comprend, outre le premier copolymère, un copolymère de fluorure de vinylidène et d'hexafluoropropène, le premier copolymère comprend, avantageusement, outre le motif répétitif fluoré comprenant un groupe pendant anhydride maléique, un motif répétitif de formule (VII) susmentionnée et un motif répétitif de formule (IX) susmentionnée.

En d'autres termes, le premier copolymère peut être de même nature que le ou (co)polymères distincts entrant dans la constitution de la matrice, si ce n'est qu'une fraction contrôlée des motifs répétitifs est modifiée par l'introduction d'un groupe pendant anhydride maléique, ce qui permet d'assurer une bonne compatibilité entre les phases hydrophobes constituées de la matrice polymère fluorée et la phase hydrophile constituée de la partie inorganique du matériau composite. L'utilisation d'un tel premier copolymère permet de s'affranchir des problèmes d'homogénéisation que l'on pourrait rencontrer avec des agents compatibilisants, qui seraient de nature très différente de celle de la matrice.

Dans la matrice, le premier copolymère peut être compris en une teneur allant de 0,5 à 100% massique, de préférence de 2 à 8% massique par rapport à la masse de la matrice polymère.

Le premier copolymère peut être préparé préalablement par un procédé comprenant les étapes suivantes :

- une étape d'irradiation d'un copolymère de base (par exemple, du PVDF ou du PVDF-HFP), par exemple au moyen

d'un rayonnement y, en présence d'anhydride maléique insaturé ;

- une étape de chauffage, par exemple, par étuvage, pendant une durée et une température appropriées (par exemple, 120°C pendant 12 heures) pour obtenir le greffage de l'anhydride maléique par réaction radicalaire avec les centres radicalaires créés au niveau du copolymère de base ; et
- éventuellement, une étape d'élimination des composés non liés au copolymère ainsi formé.

L'étape d'irradiation peut consister à appliquer des doses permettant de contrôler le taux de greffage de l'anhydride maléique, par exemple, en appliquant une dose allant de 10 à 50 kGy.

L'étape d'élimination peut consister à appliquer une mise sous vide dynamique pendant une durée appropriée (par exemple, une durée pouvant aller jusqu'à 72 heures) pour éliminer lesdits composés non liés au copolymère, notamment, lorsqu'ils sont volatils.

Avantageusement, le copolymère de base (par exemple du PVDF ou du PVDF-HFP) peut être modifié de sorte à comprendre une proportion massique de motif répétitif de formule (XI) allant de 0,01 à 2% par rapport à la masse totale de motifs répétitifs de formule (VII) et (XI).

L'étape de synthèse *in situ* des particules peut être, avantageusement, réalisée par extrusion du ou des (co)polymères destinés à constituer la matrice (à savoir le premier copolymère et éventuellement, le ou les (co)polymères distincts), et des précurseurs susmentionnés (pour la première variante) ou de l'hydrolysat (pour la deuxième variante) et éventuellement, pour ces deux variantes, en présence d'un précondensat tel que défini ci-dessus, ce qui signifie que l'opération de mise en contact et l'opération de chauffage (selon la première variante et la deuxième variante) ont lieu au sein d'une extrudeuse, les autres opérations pouvant être réalisées en dehors de l'extrudeuse.

Ainsi, dans ce cas de figure, le ou les (co)polymères constitutifs de la matrice et les précurseurs susmentionnés (pour la première variante) ou l'hydrolysat (pour la deuxième variante) éventuellement, pour ces deux variantes, en présence d'un précondensat, sont introduits, de préférence, simultanément, par au moins une entrée d'une extrudeuse, où ils sont mélangés intimement (ce qui constitue l'étape de mise en contact susmentionnée). Le ou les (co)polymères peuvent être introduits sous forme de poudres, de copeaux ou de granulés, cette dernière forme étant la forme préférée pour des raisons de facilité de manipulation et d'approvisionnement. Le mélange ainsi constitué migre ensuite dans l'extrudeuse jusqu'à atteindre l'extrémité de celle-ci.

La formation des particules inorganiques via les précurseurs ou l'hydrolysat est réalisée lors du séjour du mélange dans l'extrudeuse par chauffage à selon un profil de température particulier, de telle sorte que les réactions d'hydrolyse-condensation caractéristiques notamment du procédé sol-gel soient déclenchées. On peut ainsi parler d'extrusion réactive.

Les conditions opératoires de l'extrusion, telles que le profil de vis, le temps de résidence du mélange, la vitesse de rotation de vis seront fixées par l'homme du métier en fonction de la morphologie souhaitée du matériau final et de dispersion recherchée de particules inorganiques dans la matrice polymère.

A titre d'exemple, l'extrusion peut être réalisée avantageusement avec les conditions opératoires suivantes :

- un profil de vis du type bis-vis interpénétrée co-rotative ;
- un temps de résidence du mélange susmentionné compris entre 0,1 minute et 120 minutes, de préférence, de 2 à 30 minutes ;
- une vitesse de rotation de la vis comprise entre 5 et 1000 tours/minute, de préférence entre 50 et 200 tours/min ;
- une température du mélange allant de 150 à 350°C, de préférence de 180 à 250°C.

L'extrudeuse peut être équipée d'une filière plate, permettant l'obtention de films pouvant présenter une épaisseur allant de 5 à 500 $\mu$m ou encore d'une filière dite « filière jonc » permettant l'obtention de joncs ou éventuellement de granulés, si les joncs sont amenés à être cisaillés.

A titre d'exemple, un procédé particulier de l'invention consiste en un procédé de synthèse d'un matériau composite comprenant une matrice polymère et une charge consistant en des particules d'oxyde, telle que de la silice, comprenant des groupes échangeurs d'ions de formule $-R^2-Z^1$ telle que définie ci-dessus comprenant les opérations suivantes :

- une opération de mise en contact, dans une extrudeuse, du premier copolymère (par exemple, un copolymère comprenant un premier motif répétitif de formule (VII), un deuxième motif répétitif de formule (IX) et un troisième motif répétitif de formule (XI)) et, le cas échant, du ou des (co)polymères distincts entrant dans la constitution de la matrice polymère, avec un ou plusieurs précurseurs des particules inorganiques susmentionnées, le ou lesdits précurseurs répondant à la formule (I) suivante :

$$(X)_{y-n}\text{-M-}(R)_n \qquad (I)$$

dans laquelle :

*M est un élément métallique ou un élément métalloïde;
*X est un groupe chimique hydrolysable ;
*R est un groupe de formule $-R^2-Z^3$ telle que définie ci-dessus;
*y correspond à la valence du groupe M ; et
*n est un entier allant de 0 à (y-1) ;

ledit ou lesdits précurseurs étant utilisés en association avec un précondensat de formule (III) suivante :

$$-\left( M(X)_{y-2} \right)-$$

(III)

M, X et y étant tels que définis ci-dessus ;

- une opération d'hydrolyse-condensation, dans l'extrudeuse, du ou desdits précurseurs en association avec ledit précondensat, moyennant quoi l'on obtient des particules inorganiques résultant de l'hydrolyse-condensation desdits précurseurs et dudit précondensat ;
- une opération de transformation du groupe $Z^3$ susmentionné en un groupe chimique échangeur d'ions $Z^1$.

Par exemple, le précurseur peut être un précurseur de formule (II) suivante :

$$(OR')_{4-n}\text{-}Si\text{-}(R)_n \qquad \text{(II)}$$

dans laquelle :

- R' est tel que défini ci-dessus ;
- R correspond à la formule $-R^2-Z^3$, $R^2$ étant un groupe alkylène comprenant de 1 à 30 atome de carbone, de préférence de 1 à 10 atomes de carbone, et éventuellement dont un ou plusieurs atomes d'hydrogène sont substitués par un atome d'halogène, tel que du fluor, et $Z^3$ étant un groupe précurseur d'un groupe $Z^1$ ou d'un groupe $Z^2$ tel que mentionné ci-dessus ;
- n est un entier allant de 1 à 3.

Un précurseur répondant à cette définition donnée ci-dessus peut être le mercaptopropyltriéthoxysilane de formule $HS-(CH_2)_3-Si(OCH_2CH_3)_3$ et le précondensat peut être un précondensat pour lequel M est Si et X est un groupe -OR', R' étant tel que défini ci-dessus, tel qu'un précondensat du type polytétraméthoxysilane.

Le (co)polymère distinct peut être un copolymère de fluorure de vinylidène et d'hexafluoropropène.

A titre d'exemple, un procédé particulier de l'invention consiste en un procédé de synthèse d'un matériau composite comprenant une matrice polymère et une charge consistant en des particules d'oxyde, telle que de la silice, comprenant des groupes échangeurs d'ions de formule $-R^2-Z^1$ telle que définie ci-dessus, comprenant les opérations suivantes :

- une opération d'hydrolyse d'un ou plusieurs précurseurs des particules inorganiques de formule (I) suivante :

$$(X)_{y-n}\text{-}M\text{-}(R)_n \qquad \text{(I)}$$

*M est un élément métallique ou un élément métalloïde;
*X est un groupe chimique hydrolysable ;
*R est un groupe de formule $-R^2-Z^3$ telle que définie ci-dessus;
*y correspond à la valence du groupe M ; et
*n est un entier allant de 0 à (y-1) ;

ledit ou lesdits précurseurs étant utilisés en association avec un précondensat de formule (III) suivante :

$$-\left( M(X)_{y-2} \right)-$$

(III)

M, X et y étant tels que définis ci-dessus ;

- une opération de mise en contact, dans une extrudeuse, de l'hydrolysat obtenu à l'étape précédente avec le premier copolymère (par exemple, un copolymère comprenant un premier motif répétitif de formule (VII), un deuxième motif répétitif de formule (IX) et un troisième motif répétitif de formule (XI)) et, le cas échant, le ou les (co)polymères distincts entrant dans la constitution de la matrice polymère ;
- une opération de chauffage du mélange résultant à une température efficace pour engendrer une transformation de l'hydrolysat en particules inorganiques ;
- une opération de transformation du groupe $Z^3$ susmentionné en un groupe chimique échangeur d'ions $Z^1$.

Par exemple, le précurseur peut être un présurseur de formule (II) suivante :

$$(OR')_{4-n}\text{-}Si\text{-}(R)_n \qquad (II)$$

dans laquelle :

- R' est tel que défini ci-dessus ;
- R correspond à la formule $-R^2-Z^3$, $R^2$ étant un groupe alkylène comprenant de 1 à 30 atome de carbone, de préférence de 1 à 10 atomes de carbone, et éventuellement dont un ou plusieurs atomes d'hydrogène sont substitués par un atome d'halogène, tel que du fluor, et $Z^3$ étant un groupe précurseur d'un groupe $Z^1$ ou d'un groupe $Z^2$ tel que mentionné ci-dessus ;
- n est un entier allant de 1 à 3.

Un précurseur répondant à cette définition donnée ci-dessus peut être le mercaptopropyltriéthoxysilane de formule $HS\text{-}(CH_2)_3\text{-}Si(OCH_2CH_3)_3$ et le précondensat est un précondensat, pour lequel M est Si et X est un groupe de formule -OR', R' étant tel que défini ci-dessus, tel qu'un précondensat du type polytétraméthoxysilane.

Le (co)polymère distinct peut être un copolymère de fluorure de vinylidène et d'hexafluoropropène.

Les matériaux obtenus selon l'invention peuvent se présenter sous différentes formes, tels que des films, des joncs, des granulés.

Ces matériaux, de par les caractéristiques du procédé, peuvent présenter les avantages suivants :

- si souhaité, une forte proportion de particules inorganiques échangeuses d'ions dans la matrice polymère (par, exemple, une proportion pouvant être supérieure à 40% massique), permettant ainsi d'atteindre d'excellentes propriétés échangeuses d'ions qui ne sont plus tributaires du choix du ou des polymères ;
- un matériau homogène quant à la distribution desdites particules au sein du matériau et ainsi des propriétés échangeuses d'ions homogènes au sein de ce matériau ;
- un matériau dont les propriétés mécaniques de la matrice sont peu ou pas amoindries par la présence des particules inorganiques, ce qui peut s'expliquer, sans être lié par la théorie, que les particules ne s'organisent pas en domaines percolés du fait qu'elles sont réalisées *in situ* au sein même de la matrice.

Ces matériaux peuvent être définis, conformément à l'invention, comme des matériaux composites comprenant une matrice polymère fluorée, telle que définie ci-dessus et une charge consistant en des particules inorganiques échangeuses d'ions.

Les caractéristiques concernant la matrice polymère et les particules inorganiques échangeuses d'ions énoncées au sujet du procédé peuvent être reprises pour le compte des matériaux en tant que tels.

De manière plus spécifique, un matériau conforme à l'invention peut être un matériau pour lequel :

- la matrice polymère est une matrice comprenant un premier copolymère comprenant, outre le motif répétitif fluoré comprenant un groupe pendant anhydride maléique, un motif répétitif de formule (VII) susmentionnée et un motif répétitif de formule (IX) susmentionnée, et comprenant un copolymère de fluorure de vinylidène et d'hexafluoropropène ; et
- des particules de silice fonctionnalisées par des groupes conducteurs de protons de formule $-(CH_2)_3\text{-}SO_3H$.

Le procédé de l'invention ainsi que les matériaux de l'invention peuvent s'appliquer à de larges domaines d'applications, dès lors que ces domaines impliquent l'utilisation de matériaux échangeurs d'ions.
Ainsi, le procédé de l'invention et les matériaux de l'invention peuvent s'appliquer, par exemple, aux domaines suivants :

*le domaine de l'électrochimie, tel que :

- les piles à combustible, par exemple, les piles à combustible fonctionnant avec $H_2$/air ou $H_2/O_2$ (connues sous l'abréviation PEMFC pour « Proton Exchange Membrane Fuel Cell ») ou fonctionnant au méthanol/air (connues sous l'abréviation DMFC pour « Direct Methanol Fuel Cell »), lesdits matériaux conçus par ce procédé pouvant entrer dans la constitution de membranes échangeuses de protons ;
- les batteries au lithium, lesdits matériaux conçus par ce procédé pouvant entrer dans la constitution des électrolytes ;

*le domaine de la purification, tel que le traitement d'effluents ; et
*le domaine de l'électrochromisme.

Ainsi, les matériaux de l'invention résultant de ce procédé peuvent être destinés à entrer dans la constitution de membranes électrolytiques de pile à combustible, destinées à être insérées dans un dispositif de pile à combustible au sein d'un assemblage électrode-membrane-électrode.
Ces membranes se présentent avantageusement sous la forme de films minces, ayant, par exemple, une épaisseur de 20 à 200 micromètres.
Pour préparer un tel assemblage, la membrane peut être placée entre deux électrodes, par exemple en tissu ou en papier de carbone imprégné d'un catalyseur. L'ensemble formé de la membrane disposée entre les deux électrodes est ensuite pressé à une température adéquate afin d'obtenir une bonne adhésion électrode-membrane.
L'assemblage électrode-membrane-électrode est ensuite placé entre deux plaques assurant la conduction électrique et l'alimentation en réactifs aux électrodes. Ces plaques sont communément désignées par le terme de plaques bipolaires.
L'invention va, à présent, être décrite en référence aux exemples suivants donnés à titre illustratif et non limitatif.

## BRÈVE DESCRIPTION DES DESSINS

Les figures 1 à 3 représentent des photographies prises par microscopie électronique de trois exemples de matériaux préparés conformément à un mode de réalisation de l'invention exposé à l'exemple 1.
La figure 4 représente une photographie prise par microscopie électronique d'un matériau non conforme à l'invention, dont la préparation est exposée à l'exemple 1.
Les figures 5 à 7 représentent des photographies prises par microscopie électroniques de trois exemples de matériaux préparés conformément au mode opératoire exposé à l'exemple 2.

## EXPOSÉ DÉTAILLÉ DE MODES DE RÉALISATION PARTICULIERS

<u>EXEMPLE 1</u>

Cet exemple illustre la préparation de différents matériaux conformes à l'invention comportant, avant l'introduction dans l'extrudeuse, une étape de pré-hydrolyse des précurseurs, dont les modes de préparation sont mentionnés dans les exemples ci-dessus.
Le protocole opératoire général de cette étape de pré-hydrolyse est le suivant.
*x* g d'éthanol puis *y* g d'une solution à $10^{-2}$ N d'acide chlorhydrique sont additionnés consécutivement à un précédent mélange de A g de mercaptopropyltriéthoxysilane [$HS-(CH_2)_3-Si(OEt)_3$] et B g d'un précondensat de diméthoxysilane, dont le motif répétitif est $-Si(OCH_3)_2-O-$.
Après un temps de réaction de 2 heures à température ambiante, le mélange de précurseurs est utilisé (appelé par la suite, hydrolysat) pour l'étape d'extrusion
Les conditions opératoires de l'étape de pré-hydrolyse pour les différents essais mis en oeuvre sont énoncées dans le tableau ci-dessous (avec x=y).

| Essai | A (en g) | B (en g) | x et y (en g) |
|---|---|---|---|
| 1 | 4,73 | 5,27 | 1,43 |
| 2a, 2b | 9,52 | 1,61 | 1,35 |
| 3 | 10,31 | 3,67 | 1,34 |

Les différents hydrolysats obtenus de ces essais sont ensuite mis en oeuvre pour former, selon le procédé de l'invention, des matériaux composites comportant des particules inorganiques fonctionnalisées et compatibilisées avec la matrice.

Le protocole opératoire est le suivant :

Dans une micro-extrudeuse fournie par DSM dotée de deux vis coniques et d'une filière plate, sont incorporés progressivement 11,4 g d'un copolymère PVDF-HFP, 0,6 g du premier copolymère consistant en un copolymère des motifs répétitifs de formules (VII), (IX) et (XI) susmentionnées (ce copolymère étant dénommé par la suite PVDF-HFP-ADX, résultant de la transformation d'un copolymère PVDF-HFP avec 0,1% massique d'anhydride maléique) ainsi que les hydrolysats préparés préalablement, dont les caractéristiques en termes d'ingrédients figurent dans le tableau ci-dessus.

Le mélange est réalisé à 200°C avec une vitesse de vis de 100 tours/min jusqu'à stabilisation du couple. Le matériau est ensuite extrait en sortie à l'aide d'une micro-calandreuse fournie également par DSM. Au final, un film de matériau hybride avec une épaisseur comprise entre 200 et 300 µm est récupéré.

Le copolymère PVDF-HFP-ADX utilisé ci-dessus peut être préparé préalablement selon le protocole suivant.

On prépare un mélange de Kynar Flex PVDF 2750 et de 2% en masse d'anhydride maléique. Ce mélange est préparé en utilisant une extrudeuse à deux vis à 230°C et 150 tours/minute à un débit de 10 kg/h. Après l'étape d'extrusion, 1,8% d'anhydride maléique reste dans le produit, le reste étant perdu lors de l'étape d'extrusion. Le produit ainsi préparé est ensaché dans des sacs étanches en aluminium. Ces sacs sont ensuite irradiés sous 3 Mrad. Un taux de greffage de 20% à 30% est déterminé, ce taux étant vérifié après une étape de solubilisation-précipitation. Le produit est alors placé sous vide pendant une nuit à 130°C pour évacuer l'anhydride maléique résiduel et l'acide fluorhydrique libéré lors de l'irradiation.

Le tableau ci-dessous regroupe les différentes proportions (en % massique par rapport à la masse totale du mélange) de mercaptopropyltriéthylsilane (dit, ci-dessous, composé -SH), de diméthoxysilane (dit, ci-dessous, précondensat) et du copolymère PVDF-HFP-ADX mises en oeuvre pour les différents essais.

| Essai | PVDF-HFP | | Composé -SH | | Préconden-sat | | PVDF-HFP-ADX | |
|---|---|---|---|---|---|---|---|---|
| | m (g) | % m | m (g) | % m | m (g) | % m | m (g) | % m |
| 1 | 11,4 | 51,82 | 4,73 | 21,50 | 5,27 | 23,95 | 0,6 | 2,73 |
| 2a | 11,4 | 49,29 | 9,52 | 41,16 | 1,61 | 6,96 | 0,6 | 2,59 |
| 2b | 11,4 | 50,60 | 9,52 | 42,25 | 1,61 | 7,15 | 0 | 0 |
| 3 | 11,4 | 43,88 | 10,31 | 39,68 | 3,67 | 14,13 | 0,6 | 2,31 |

Le tableau ci-dessous regroupe les caractéristiques du matériau en terme de pourcentages massiques de fonction -SH, de particules inorganiques fonctionnelles telles que mentionnées ci-dessus et de particules de silice non fonctionnelles.

| Essai | PVDF-HFP+ PVDF-HFP-ADX sauf pour essai 2b ne comportant pas de PVDF-HPP-ADX | Fonction -SH | | Particules inorganiques non fonctionnelles | | Particules inorganiques fonctionnelles | |
|---|---|---|---|---|---|---|---|
| | Masse (en g) | Masse (en g) | % massique | Masse (en g) | % massique | Masse (en g) | % massique |
| 1 | 12 | 2,52 | 14,40 | 4,01 | 22,91 | 5,50 | 31,42 |
| 2a | 12 | 5,07 | 28,20 | 2,99 | 16,61 | 5,98 | 33,26 |
| 3 | 12 | 5,49 | 28,07 | 4,32 | 22,09 | 7,57 | 38,67 |
| 2b | 11,4 | 5,07 | 29,17 | 2,99 | 17,20 | 5,98 | 34,41 |

La masse de fonction SH correspond à la masse de $HS-CH_2-CH_2-CH_2-SiO_{3/2}$ créé après réaction d'hydrolyse-condensation du mercaptopropyltriéthoxysilane, c'est-à-dire correspond à (A*127/238,42), A correspondant à la masse de mercaptopropyltriéthoxysilane susmentionné, 127 correspondant à la masse molaire de $HS-CH_2-CH_2-CH_2-SiO_{3/2}$ et 238,42 correspondant à la masse molaire de mercaptopropyltriéthoxysilane.

Le pourcentage massique de fonction -SH est un pourcentage massique de SH par rapport à la masse totale du matériau final.

Ce pourcentage massique, après considération des réactions d'hydrolyse-condensation, est évalué par la formule suivante :

$$\% = (A*127/238,42)/[(A*127/238,42)+(B*60/106,2)+C+D] *100$$

où :

- A, B, C et D correspondent respectivement aux masses de mercaptopropyltriéthoxysilane (masse molaire de 238,42), de précondensat de diméthoxysilane (masse molaire de 106,2), de PVDF-HFP et de PVDF-HFP-ADX ; et
- 60 correspond à la masse molaire de $SiO_2$ issu de l'hydrolyse-condensation du précondensat.

La masse et le pourcentage massique de particules inorganiques fonctionnelles sont déterminés de la manière suivante.

$$Masse= (A*127/238,42) + (B*60/106,2)$$

$$\%= [(A*127/238,42 + B*60/106,2)]/ [(A*127/238,42)+(B*60/106,2)+C+D]*100$$

La masse et le pourcentage massique de particules inorganiques non fonctionnelles sont déterminés de la manière suivante.

$$Masse= (A*52/238,42) + (B*60/106,2)$$

$$\%= [(A*52/238,42 + B*60/106,2)]/ [(A*127/238,42)+(B*60/106,2)+C+D]*100$$

52 correspondant à la masse molaire de $SiO_{3/2}$ provenant des réactions d'hydrolyse-condensation du composé mercaptopropyltriéthoxysilane.

Le comportement et les propriétés finaux des matériaux hybrides obtenus dépendent fortement de la morphologie et donc de la taille des charges ainsi que de leurs dispersions au sein de la matrice polymère. Le copolymère PVDF-HFP-ADX est utilisé à 5% massique par rapport au PVDF-HFP. Les figures 1 à 4 jointes en annexe illustrent des photographies des matériaux obtenus respectivement aux essais 1, 2a et 3, la dernière figure (la figure 4) étant une photographie du matériau obtenu sans copolymère PVDF-HFP-ADX (essai 2b).

Concernant les figures 1 à 3, il ressort clairement que les particules inorganiques formant la phase inorganique

fonctionnelle s'organisent en micro-domaines. Quant à la figure 4, il apparaît que ces particules s'organisent en macro-domaines.

EXEMPLE 2

Cet exemple illustre la préparation de matériaux conformes à l'invention sur des bases opératoires similaires à celles de l'exemple 1, si ce n'est que la matrice polymère est constituée exclusivement d'un copolymère PVDF-HFP-ADX préparé par transformation d'un copolymère PVDF-HFP avec une proportion massique déterminée d'anhydride maléique. Trois essais ont été envisagés avec respectivement un copolymère PVDF-HFP-ADX préparé avec 0,15% massique d'anhydride maléique (essai 4), un copolymère PVDF-HFP-ADX préparé avec 0,24% massique d'anhydride maléique (essai 5) et un copolymère PVDF-HFP-ADX préparé avec 0,75% massique d'anhydride maléique (essai 6).
Les conditions opératoires de l'étape de pré-hydrolyse pour les différents essais mis en oeuvre sont énoncées dans le tableau ci-dessous (avec x=y).

| Essai | A (en g) | B (en g) | x et y (en g) |
|---|---|---|---|
| 4 | 9,52 | 1,61 | 1,35 |
| 5 | 9,52 | 1,61 | 1,35 |
| 6 | 9,52 | 1,61 | 1,35 |

Les différents hydrolysats obtenus de ces essais sont ensuite mis en oeuvre pour former, selon le procédé de l'invention, des matériaux composites comportant des particules inorganiques fonctionnalisées et compatibilisées avec la matrice.
Le tableau ci-dessous regroupe les différentes proportions (en % massique par rapport à la masse totale du mélange) de mercaptopropyltriéthylsilane (dit, ci-dessous, composé -SH), de diméthoxysilane (dit, ci-dessous, précondensat) et du copolymère PVDF-HFP-ADX mises en oeuvre pour les différents essais.

| Essai | PVDF-HFP-ADX | | Composé -SH | | Précondensat | |
|---|---|---|---|---|---|---|
| | m (g) | %m | m (g) | % (m) | m (g) | %m |
| 4 | 12 | 51,88 | 9,52 | 41,16 | 1,61 | 6,96 |
| 5 | 12 | 51,88 | 9,52 | 41,16 | 1,61 | 6,96 |
| 6 | 12 | 51,88 | 9,52 | 41,6 | 1,61 | 6,96 |

Le tableau ci-dessous regroupe les caractéristiques du matériau en terme de pourcentages massiques de fonction -SH, de particules inorganiques fonctionnelles telles que mentionnées ci-dessus et de particules de silice non fonctionnelles.

| Essai | Fonction -SH | | Particules inorganiques non fonctionnelles | | Particules inorganiques fonctionnelles | |
|---|---|---|---|---|---|---|
| | m (en g) | % m | m (en g) | %m | m (en g) | % m |
| 4 | 5,07 | 28,20 | 2,99 | 16,61 | 5,98 | 33,26 |
| 5 | 5,07 | 28,20 | 2,99 | 16,61 | 5,98 | 33,26 |
| 6 | 5,07 | 28,20 | 2,99 | 16,61 | 5,98 | 33,26 |

Les figures 5 à 7 jointes en annexe illustrent des photographies des matériaux obtenus respectivement à des essais 4 à 6, desquels ressortent clairement que les particules inorganiques formant la phase inorganique fonctionnelle s'organisent en micro-domaine, la morphologie étant d'autant plus fine que les taux d'anhydride maléique sont élevés.

EXEMPLE 3

Pour tester la possibilité d'appliquer les matériaux obtenus conformément au procédé de l'invention comme

membrane de pile à combustible, il a été procédé à la transformation chimique des fonctions -SH en $-SO_3H$ avec les matériaux des essais 4 à 6 susmentionnés.

Pour ce faire, on traite ces matériaux par immersion d'une solution oxydante d'eau oxygénée $H_2O_2$ à 50% massique pendant 7 jours à température ambiante.

Après 7 jours d'agitation, on rince les matériaux à trois reprises avec de l'eau permutée puis on procède à un quatrième rinçage pendant 24 heures, afin d'ôter le reste d'eau oxygénée et toutes formes d'impuretés.

On détermine ensuite le nombre de sites conducteurs protoniques, encore appelé capacité d'échange ionique (connue sous l'abréviation CEI) par dosage direct acido-basique. Pour ce faire, les matériaux sont immergés dans une solution de NaCl 2M pendant 24 heures pour un échange total des protons issus des groupes $-SO_3H$. Les matériaux ainsi obtenus sont ensuite séchés sous vide pendant 24 heures à 60°C avant d'en déterminer la masse sèche (dite $M_{éch}$).

Les protons libérés de la solution sont dosés par colorimétrie (par utilisation de phénolphtaléine) avec une solution titrante de NaOH à 0,05 M.

La CEI est alors déterminée par la formule suivante :

$$\text{CEI (en méq.g}^{-1}\text{)}=(1000*C_{NaOH}*V_{NaOH})/M_{éch}$$

dans laquelle :

- $C_{NAOH}$ correspond à la concentration de la solution de soude ;
- $V_{NAOH}$ correspond au volume de NaOH à l'équivalence ; et
- $M_{éch}$ correspond à la masse sèche du matériau.

Les capacités d'échange ionique obtenues avec les différents matériaux testés figurent dans le tableau ci-dessous.

| Matériau | CEI |
|---|---|
| Matériau issu de l'essai 4 | 1,07 |
| Matériau issu de l'essai 5 | 0,82 |
| Matériau issu de l'essai 6 | 0,98 |

Les matériaux susmentionnés présentent tous une forte capacité d'échange ionique, dont les valeurs sont du même ordre de grandeur que le Nafion®.

Qui plus est, la morphologie atteinte avec l'utilisation d'agents compatibilisants conformes à la définition de l'invention permet d'obtenir un réseau percolé de particules inorganiques conductrices de protons au sein de la matrice polymère.

## Revendications

1. Procédé de préparation d'un matériau composite comprenant une matrice polymère fluorée et une charge consistant en des particules inorganiques échangeuses d'ions comprenant une étape de synthèse *in situ* desdites particules au sein de la matrice polymère, ladite matrice comprenant au moins un premier copolymère consistant en un copolymère comprenant au moins deux types de motifs répétitifs fluorés, dont un type est porteur d'au moins un groupe pendant anhydride maléique.

2. Procédé selon la revendication 1, dans lequel l'étape de synthèse *in situ* est réalisée par méthode sol-gel.

3. Procédé selon l'une quelconque des revendications précédentes, dans lequel l'étape de synthèse *in situ* est réalisée par méthode sol-gel comprenant les opérations suivantes :

   - une opération de mise en contact du premier copolymère et, le cas échéant, du ou des (co)polymères distincts constitutifs de la matrice avec un ou plusieurs précurseurs des particules inorganiques, le ou lesdits précurseurs répondant à la formule (I) suivante :

$(X)_{y-n}$-M-$(R)_n$ (1)

dans laquelle :

*M est un élément métallique ou un élément métalloïde ;
*X est un groupe chimique hydrolysable ;
*R est un groupe chimique échangeur d'ions ou un groupe précurseur d'un groupe chimique échangeur d'ions ;
*y correspond à la valence de l'élément M ; et
*n est un entier allant de 0 à (y-1) ;

- une opération d'hydrolyse-condensation du ou desdits précurseurs, moyennant quoi l'on obtient des particules inorganiques résultant de l'hydrolyse-condensation desdits précurseurs ;
- dans le cas où R est un groupe précurseur d'un groupe chimique échangeur d'ions, une opération de transformation du groupe précurseur en un groupe chimique échangeur d'ions ou, dans le cas où n=0, une opération de fonctionnalisation desdites particules par des groupes chimiques échangeurs d'ions.

**4.** Procédé selon la revendication 1 ou 2, dans lequel l'étape de synthèse *in situ* est réalisée par méthode sol-gel comprenant les étapes suivantes :

- une opération d'hydrolyse d'un ou plusieurs précurseurs de particules inorganiques de formule (I) suivante :

$(X)_{y-n}$-M-$(R)_n$ (I)

dans laquelle :

*M est un élément métallique ou un élément métalloïde ;
*X est un groupe chimique hydrolysable ;
*R est un groupe chimique échangeur d'ions ou un groupe précurseur d'un groupe chimique échangeur d'ions ;
*y correspond à la valence de l'élément M ; et
*n est un entier allant de 0 à (y-1) ;

- une opération de mise en contact de l'hydrolysat obtenu à l'étape précédente avec le premier copolymère et, le cas échant, le ou les (co)polymères distincts entrant dans la constitution de la matrice tels que définis ci-dessus ;
- une opération de chauffage du mélange résultant à une température efficace pour engendrer une transformation de l'hydrolysat en particules inorganiques ;
- dans le cas où R est un groupe précurseur d'un groupe chimique échangeur d'ions, une opération de transformation du groupe précurseur en un groupe chimique échangeur d'ions ou, dans le cas où n=0, une opération de fonctionnalisation desdites particules par des groupes chimiques échangeurs d'ions.

**5.** Procédé selon la revendication 3 ou 4, dans lequel R est un groupe échangeur de cations de formule $-R^2-Z^1$, dans laquelle :

- $R^2$ est une liaison simple, un groupe alkylène, linéaire ou ramifié, et éventuellement dont un ou plusieurs atomes d'hydrogène sont substitués par un atome d'halogène, tel que du fluor ou $R^2$ est un groupe hydrocarboné cyclique ;
- $Z^1$ est un groupe $-SO_3H$, $-PO_3H_2$, $-CO_2H$, éventuellement sous forme de sels.

**6.** Procédé selon la revendication 3 ou 4, dans lequel R est un groupe de formule $-R^2-Z^3$, dans laquelle :

- $R^2$ est une liaison simple, un groupe alkylène, linéaire ou ramifié, et éventuellement dont un ou plusieurs atomes d'hydrogène sont substitués par un atome d'halogène, tel que du fluor ou $R^2$ est un groupe hydrocarboné cyclique ;
- $Z^3$ est un groupe précurseur d'un groupe $Z^1$ tel que défini à la revendication 5.

**7.** Procédé selon la revendication 6, dans lequel le précurseur est un précurseur de formule (II) suivante :

$(OR')_{4-n}$-Si-$(R)_n$ (II)

dans laquelle :

- R' est un groupe alkyle;
- R correspond à la formule $-R^2-Z^3$, $R^2$ étant un groupe alkylène, linéaire ou ramifié, comprenant de 1 à 30 atomes de carbone, et éventuellement dont un ou plusieurs atomes d'hydrogène sont substitués par un atome d'halogène, tel que du fluor et $Z^3$ étant un groupe précurseur d'un groupe $Z^1$ tel que défini à la revendication 5 ;
- n est un entier allant de 1 à 3.

**8.** Procédé selon l'une quelconque des revendications 3 à 7, dans lequel le ou les précurseurs sont utilisés en combinaison avec un précondensat comprenant des unités répétitives de formule (III) suivante :

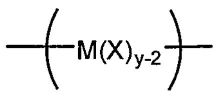

(III)

dans laquelle :

- M est un élément métallique ou métalloïde tel que défini à la revendication 3 ou 4;
- X est un groupe tel que défini à la revendication 3 ou 4;
- y correspond à la valence de l'élément M.

**9.** Procédé selon l'une quelconque des revendications précédentes, dans lequel la matrice est constituée uniquement dudit premier copolymère.

**10.** Procédé selon l'une quelconque des revendications 1 à 8, dans lequel la matrice comprend, outre ledit premier copolymère, au moins un autre (co)polymère distinct dudit premier copolymère.

**11.** Procédé selon l'une quelconque des revendications précédentes, dans lequel le premier copolymère consiste en un copolymère comprenant, outre le motif répétitif fluoré porteur d'un groupe pendant anhydride maléique, un motif répétitif répondant à la formule (V) suivante :

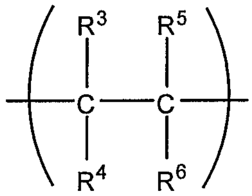

(V)

dans laquelle $R^3$, $R^4$, $R^5$ et $R^6$ représentent, indépendamment l'un de l'autre, un atome d'hydrogène, un atome d'halogène, un groupe perfluoroalkyle ou un groupe perfluoroalcoxy, à condition que l'un au moins des groupes $R^3$ à $R^6$ représente un atome de fluor, un groupe perfluoroalkyle ou un groupe perfluoroalcoxy.

**12.** Procédé selon l'une quelconque des revendications précédentes, dans lequel le premier copolymère comprend, en outre, un motif répétitif de formule (IX) suivante :

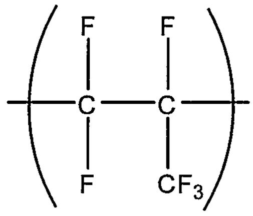

(IX)

13. Procédé selon l'une quelconque des revendications précédentes, dans lequel le motif répétitif fluoré comprenant un groupe pendant anhydride maléique est un motif répétitif de formule (X) suivante :

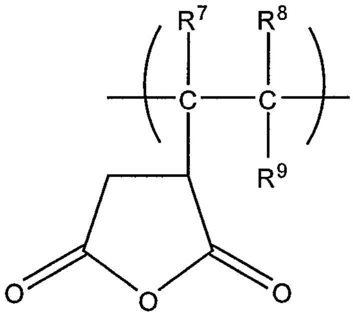

(X)

dans laquelle $R^7$ à $R^9$ représentent, indépendamment l'un de l'autre, un atome d'hydrogène, un atome d'halogène, un groupe perfluoroalkyle.

14. Procédé selon l'une quelconque des revendications précédentes, dans lequel le premier copolymère comprend, hormis le motif répétitif fluoré comprenant un groupe pendant anhydride maléique, un ou plusieurs motifs répétitifs de formule(s) identique(s) à celle(s), le cas échéant, du ou des (co)polymères distincts entrant dans la constitution de la matrice polymère fluorée.

15. Matériau composite comprenant une matrice polymère fluorée comprend au moins un premier copolymère tel que défini selon l'une quelconque des revendications 1 à 14 et une charge consistant en des particules inorganiques échangeuses d'ions.

## Patentansprüche

1. Verfahren zur Herstellung eines Verbundmaterials, das eine fluorierte Polymermatrix und einen Füllstoff umfasst, der aus anorganischen Ionenaustauschpartikeln besteht, umfassend einen Schritt der Synthese der Partikel innerhalb der Polymermatrix *in situ,* wobei die Matrix wenigstens ein erstes Copolymer umfasst, das aus einem Copolymer besteht, welches wenigstens zwei Typen von sich wiederholenden fluorierten Motiven umfasst, von denen ein Typ Träger wenigstens einer Maleinanhydrid-Seitengruppe ist.

2. Verfahren nach Anspruch 1, wobei der *In-Situ*-Syntheseschritt durch ein Sol-Gel-Verfahren realisiert wird.

3. Verfahren nach einem der vorhergehenden Ansprüche, wobei der *In-Situ*-Syntheseschritt durch ein Sol-Gel-Verfahren realisiert wird, das die folgenden Arbeitsschritte umfasst:

- einen Arbeitsschritt des Inkontaktbringens des ersten Copolymers und gegebenenfalls des oder der unterschiedlichen (Co)Polymers/Polymere, aus dem/denen die Matrix gebildet ist, mit einem oder mehreren Präkursoren der anorganischen Partikel, wobei der oder die Präkursor(en) der nachfolgenden Formel (I) genügt/genügen:

$$(X)_{y-n}\text{-M-}(R)_n \qquad (I)$$

wobei:

*M ein Metallelement oder ein Metalloidelement ist;
*X eine hydrolisierbare chemische Gruppe ist;
*R eine chemische Ionenaustauschgruppe oder eine Präkursorgruppe einer chemischen Ionenaustauschgruppe ist;
*y der Valenz des Elements M entspricht; und
*n eine ganze Zahl zwischen 0 und (y-1) ist;

- einen Arbeitsschritt der Hydrolyse-Kondensation des oder der Präkursors/Präkursoren, wodurch man anorganische Partikel erhält, die aus der Hydrolyse-Kondensation der Präkursoren resultieren;
- in dem Fall, in dem R eine Präkursorgruppe einer chemischen Ionenaustauschgruppe ist, einen Arbeitsschritt der Transformation der Präkursorgruppe in eine chemische Ionenaustauschgruppe oder, in dem Fall, in dem n=0 ist, einen Arbeitsschritt der Funktionalisierung der Partikel durch chemische Ionenaustauschgruppen.

**4.** Verfahren nach Anspruch 1 oder 2, wobei der *In-Situ*-Syntheseschritt durch ein Sol-Gel-Verfahren realisiert wird, das die folgenden Schritte umfasst:

- einen Arbeitsschritt der Hydrolyse eines oder mehrerer Präkursors/Präkursoren von anorganischen Partikeln mit der nachfolgenden Formel (I):

$$(X)_{y-n}\text{-M-}(R)_n \qquad (I)$$

wobei:

*M ein Metallelement oder ein Metalloidelement ist;
*X eine hydrolisierbare chemische Gruppe ist;
*R eine chemische Ionenaustauschgruppe oder eine Präkursorgruppe einer chemischen Ionenaustauschgruppe ist;
*y der Valenz des Elements M entspricht; und
*n eine ganze Zahl zwischen 0 und (y-1) ist;

- einen Arbeitsschritt des Inkontaktbringens des im vorhergehenden Schritt erhaltenen Hydrolysats mit dem ersten Copolymer und gegebenenfalls dem oder den unterschiedlichen (Co)Polymer/Polymeren, das/die beim Aufbau der Matrix wie oben definiert vorkommt/vorkommen;
- einen Arbeitsschritt des Heizens der resultierenden Mischung auf eine Temperatur, die wirksam ist, um eine Transformation des Hydrolysats in anorganische Partikel zu bewirken;
- in dem Fall, in dem R eine Präkursorgruppe einer chemischen Ionenaustauschgruppe ist, einen Arbeitsschritt der Transformation der Präkursorgruppe in eine chemische Ionenaustauschgruppe oder, in dem Fall, in dem n=0 ist, einen Arbeitsschritt der Funktionalisierung der Partikel durch chemische Ionenaustauschgruppen.

**5.** Verfahren nach Anspruch 3 oder 4, bei dem R eine Kationenaustauschgruppe der Formel $-R^2-Z^1$ ist, wobei:

- $R^2$ eine Einfachbindung ist, eine lineare oder verzweigte Alkylengruppe, und von der gegebenenfalls ein oder mehrere Wasserstoffatome durch ein Halogenatom substituiert sind, beispielsweise Fluor, oder $R^2$ eine zyklische Kohlenwasserstoffgruppe ist;
- $Z^1$ eine Gruppe $-SO_3H$, $-PO_3H$, $-CO_2H$ ist, gegebenenfalls in Form von Salzen.

**6.** Verfahren nach Anspruch 3 oder 4, wobei R eine Gruppe der Formel $-R^2-Z^3$ ist, wobei:

- $R^2$ eine Einfachbindung ist, eine lineare oder verzweigte Alkylengruppe, und von der gegebenenfalls ein oder mehrere Wasserstoffatome durch ein Halogenatom substituiert sind, beispielsweise Fluor, oder $R^2$ eine zyklische Kohlenwasserstoffgruppe ist;
- $Z^3$ eine Präkursorgruppe einer Gruppe $Z^1$ wie im Anspruch 5 definiert ist.

**7.** Verfahren nach Anspruch 6, wobei der Präkursor ein Präkursor der nachfolgenden Formel (II) ist:

$$(OR')_{4-n}\text{-Si-}(R)_n \qquad \text{(II)}$$

wobei:

- R' eine Alkylgruppe ist;
- R der Formel $-R^2-Z^3$ entspricht, wobei $R^2$ eine lineare oder verzweigte Alkylengruppe ist, die 1 bis 30 Kohlenstoffatome umfasst, und wovon gegebenenfalls ein oder mehrere Wasserstoffatome durch ein Halogenatom substituiert sind, wie zum Beispiel Fluor, und $Z^3$ eine Präkursorgruppe einer Gruppe $Z^1$ wie im Anspruch 5 definiert ist;
- n eine ganze Zahl zwischen 1 und 3 ist.

**8.** Verfahren nach einem der Ansprüche 3 bis 7, wobei der oder die Präkursor(en) verwendet wird/werden in Kombination mit einem Vorkondensat, umfassend sich wiederholende Einheiten der nachfolgenden Formel (III):

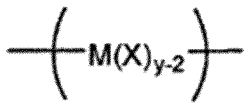

**(III)**

wobei:

- M ein Metallelement oder Metalloidelement wie im Anspruch 3 oder 4 definiert ist;
- X eine Gruppe wie im Anspruch 3 oder 4 definiert ist;
- y der Valenz des Elements M entspricht.

**9.** Verfahren nach einem der vorhergehenden Ansprüche, wobei die Matrix ausschließlich aus dem ersten Copolymer gebildet ist.

**10.** Verfahren nach einem der Ansprüche 1 bis 8, wobei die Matrix zusätzlich zu dem ersten Copolymer wenigstens ein anderes (Co)Polymer umfasst, das von dem ersten Copolymer verschieden ist.

**11.** Verfahren nach einem der vorhergehenden Ansprüche, wobei das erste Copolymer aus einem Copolymer besteht, das zusätzlich zu dem sich wiederholenden fluorierten Motiv, das Träger einer Maleinanhydrid-Seitengruppe ist, ein sich wiederholendes Motiv umfasst, das der nachfolgenden Formel (V) genügt:

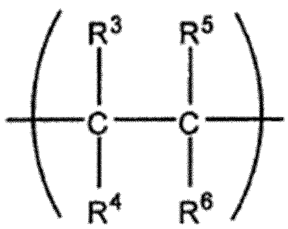

(V)

wobei $R^3$, $R^4$, $R^5$ und $R^6$ unabhängig voneinander ein Wasserstoffatom, ein Halogenatom, eine Perfluoralkylgruppe oder eine Perfluoralcoxygruppe darstellen, unter der Voraussetzung, dass wenigstens eine der Gruppen $R^3$ bis $R^6$ ein Fluoratom, eine Perfluoralkylgruppe oder eine Perfluoralcoxygruppe darstellt.

**12.** Verfahren nach einem der vorhergehenden Ansprüche, wobei das erste Copolymer ferner ein sich wiederholendes Motiv der nachfolgenden Formel (IX) umfasst:

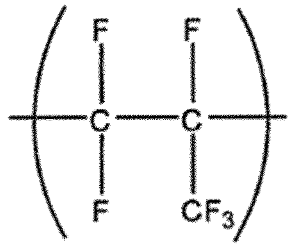

(IX).

13. Verfahren nach einem der vorhergehenden Ansprüche, wobei das sich wiederholende fluorierte Motiv, das eine Maleinanhydrid-Seitengruppe umfasst, ein sich wiederholendes Motiv der nachfolgenden Formel (X) ist:

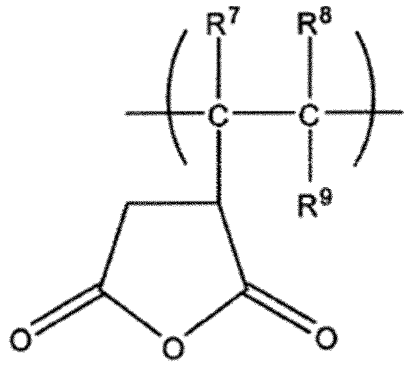

(X)

wobei $R^7$ bis $R^9$ unabhängig voneinander ein Wasserstoffatom, ein Halogenatom, eine Perfluoralkylgruppe darstellen.

14. Verfahren nach einem der vorhergehenden Ansprüche, wobei das erste Copolymer außer dem sich wiederholenden fluorierten Motiv, das eine Maleinanhydrid-Seitengruppe umfasst, ein oder mehrere sich wiederholende Motive mit einer Formel/Formeln umfasst, die gegebenenfalls identisch ist/sind zu jener/jenen des oder der unterschiedlichen (Co)Polymer/Polymere, das/die bei der Bildung der fluorierten Polymermatrix vorkommt/vorkommen.

15. Verbundmaterial, umfassend eine fluorierte Polymermatrix, umfassend wenigstens ein erstes Copolymer wie in einem der Ansprüche 1 bis 14 definiert sowie einen Füllstoff, der aus anorganischem Ionenaustauschpartikeln besteht.

## Claims

1. A process for preparing a composite material comprising a fluorinated polymeric matrix and a filler consisting in ion exchange inorganic particles comprising a step for synthesizing *in situ* said particles within the polymeric matrix, said matrix comprising at least one first copolymer consisting in a copolymer comprising at least two types of fluorinated recurrent units, one type of which bears at least one pendant maleic anhydride group.

2. The process according to claim 1, wherein the *in situ* synthesis step is carried out with a sol-gel method.

3. The process according to any of the preceding claims, wherein the *in situ* synthesis step is carried out with a sol-gel method comprising the following operations:

- an operation for putting the first copolymer and if necessary the constitutive distinct (co)polymer(s) of the

matrix, in contact with one or several precursors of the inorganic particles, said precursor(s) fitting the following formula (I):

$$(X)_{y-n}\text{-M-}(R)_n \qquad (I)$$

wherein:

*M is a metal element or a metalloid element;
*X is a hydrolyzable chemical group;
*R is an ion exchange chemical group or a precursor group of an ion exchange chemical group;
*y corresponds to the valency of the element M; and
*n is an integer ranging from 0 to (y-1);

- a hydrolysis-condensation operation of said precursor(s), in return for which inorganic particles are obtained, resulting from the hydrolysis-condensation of said precursors;
- in the case when R is a precursor group of an ion exchange chemical group, an operation for transforming the precursor group into an ion exchange chemical group or, in the case when n=0, an operation for functionalizing said particles with ion exchange chemical groups.

4. The process according to claim 1 or 2, wherein the *in situ* synthesis step is carried out with a sol-gel method comprising the following steps:

- an operation for hydrolysis of one or several precursors of inorganic particles of the following formula (I):

$$(X)_{y-n}\text{-M-}(R)_n \qquad (I)$$

wherein:

*M is a metal element or a metalloid element;
*X is a hydrolyzable chemical group;
*R is an ion exchange chemical group or a precursor group of an ion exchange chemical group;
*y corresponds to the valency of element M; and
*n is an integer ranging from 0 to (y-1);

- an operation for putting the hydrolyzate obtained in the preceding step in contact with the first copolymer and if necessary the distinct (co)polymer(s) entering the composition of the matrix as defined above;
- an operation for heating the resulting mixture to an effective temperature for generating transformation of the hydrolyzate into inorganic particles;
- in the case when R is a precursor group of an ion exchange chemical group, an operation for transforming the precursor group into an ion exchange chemical group or, in the case when n=0, an operation for functionalizing said particles with ion exchange chemical groups.

5. The process according to claim 3 or 4, wherein R is a cation exchange group of formula $-R^2-Z^1$, wherein:

- $R^2$ is a simple bond, a linear or branched alkylene group, and optionally for which one or several hydrogen atoms are substituted with a halogen atom, such as fluorine, or $R^2$ is a cyclic hydrocarbon group;
- $Z^1$ is a group $-SO_3H$, $-PO_3H_2$, $-CO_2H$, optionally as salts.

6. The process according to claim 3 or 4, wherein R is a group of formula

- $R^2-Z^3$, wherein:

- $R^2$ is a simple bond, a linear or branched alkylene group, and optionally for which one or several hydrogen atoms are substituted with a halogen atom, such as fluorine, or $R^2$ is a cyclic hydrocarbon group;
- $Z^3$ is a precursor group of a group $Z^1$ as defined in claim 5.

7. The process according to claim 6, wherein the precursor is a precursor of the following formula (II):

$(OR')_{4-n}$-Si-$(R)_n$ (II)

wherein:

- R' is as defined in claim 7;
- R corresponds to the formula $-R^2-Z^3$, $R^2$ being a linear or branched alkylene group, comprising from 1 to 30 carbon atoms, and optionally for which one or several hydrogen atoms are substituted with a halogen atom, such as fluorine and $Z^3$ is a precursor group of a group $Z^1$ as defined in claim 8;
- n is an integer ranging from 1 to 3.

**8.** The process according to any of claims 3 to 7, wherein the precursor(s) are used in combination with a precondensate comprising recurrent units of the following formula (III):

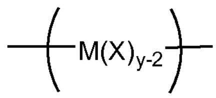

(III)

wherein:

- M is a metal or metalloid element as defined in claim 3 or 4;
- X is a group as defined in claim 3 or 4;
- y corresponds to the valency of element M.

**9.** The process according to any of the preceding claims, wherein the matrix exclusively consists of said first copolymer.

**10.** The process according to any of claims 1 to 8, wherein the matrix comprises, in addition to said first copolymer, at least one other (co)polymer distinct from said first copolymer.

**11.** The process according to any of the preceding claims, wherein the first copolymer consists in a copolymer comprising, in addition to the fluorinated recurrent unit bearing the pendant maleic anhydride group, a recurrent unit fitting the following formula (V):

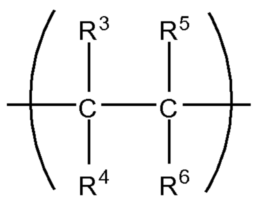

(V)

wherein $R^3$, $R^4$, $R^5$ and $R^6$ represent, independently of each other, a hydrogen atom, a halogen atom, a perfluoroalkyl group or a perfluoroalkoxy group, provided that at least one of the groups $R^3$ to $R^6$ represents a fluorine atom, a perfluoroalky group or a perfluoroalkoxy group.

**12.** The process according to any of the preceding claims, wherein the first copolymer further comprises a recurrent unit of the following formula (IX):

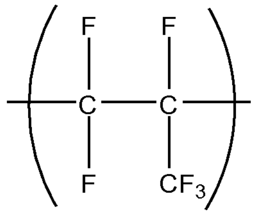

(IX)

13. The process according to any of the preceding claims, wherein the fluorinated recurrent unit comprising a pendant maleic anhydride group is a recurrent unit of the following formula (X):

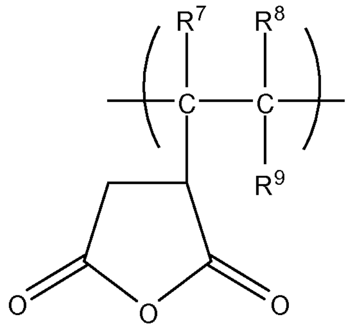

(X)

wherein $R^7$ to $R^9$ represent, independently of each other, a hydrogen atom, a halogen atom, a perfluoroalkyl group.

14. The process according to any of the preceding claims, wherein the first copolymer comprises, except for the fluorinated recurrent units comprising a pendant maleic anhydride group, one or several recurrent units with formula(e) identical with that(those), if necessary, of the distinct (co)polymers entering the composition of the fluorinated polymer matrix.

15. A composite material comprising a fluorinated polymeric matrix comprises at least one first copolymer as defined according to any of claims 1 to 14 and a filler consisting in ion exchange inorganic particles.

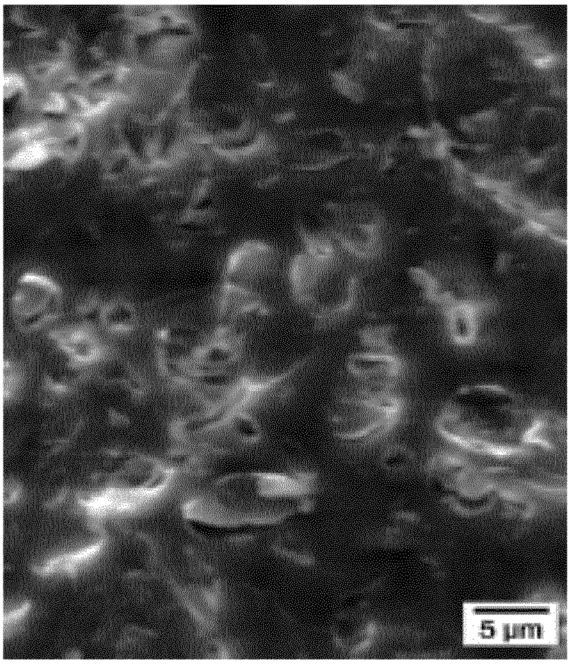


FIG.1

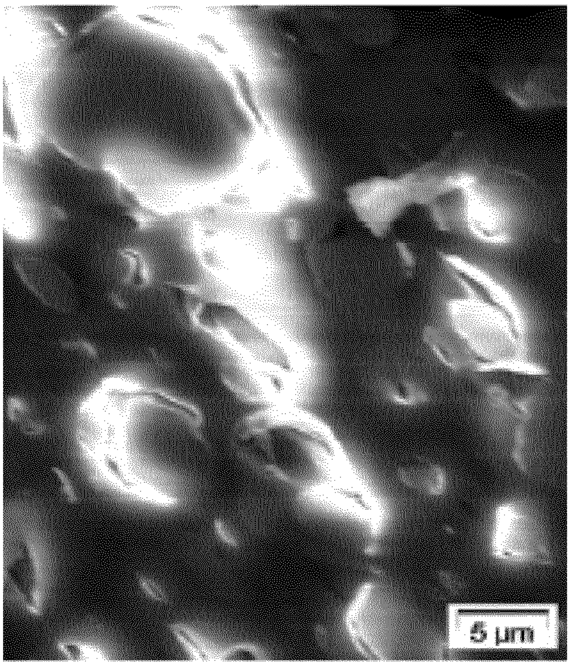


FIG.2

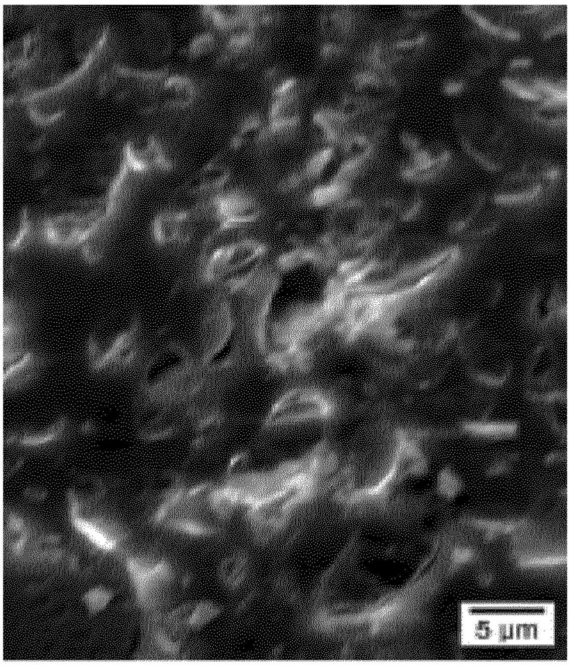


FIG.3

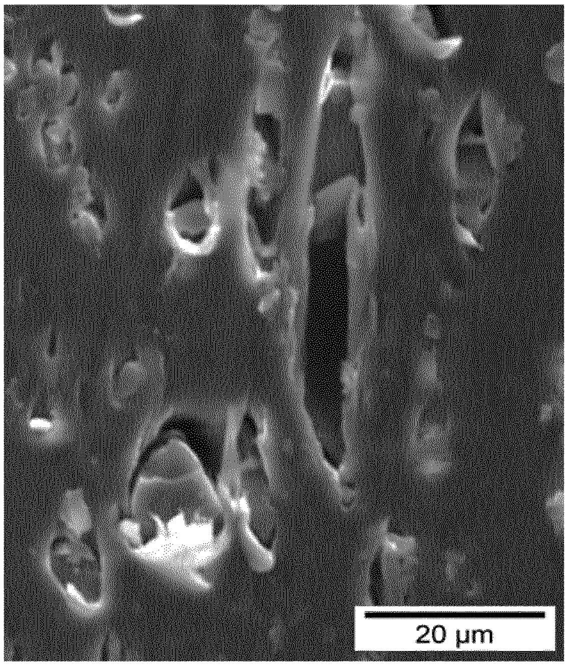


FIG.4

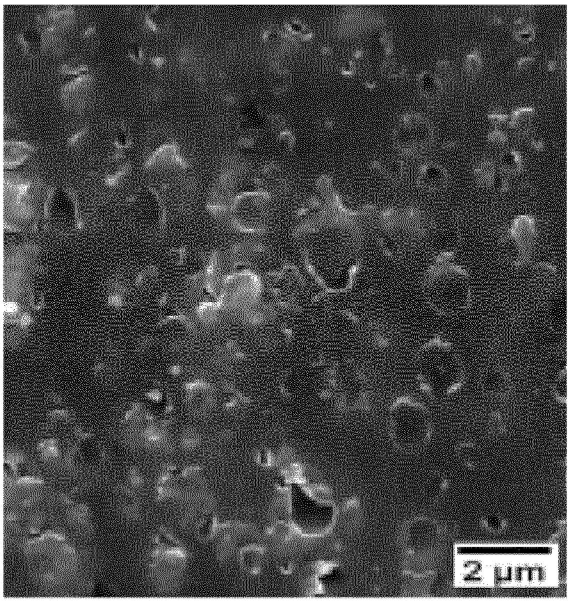


FIG.5

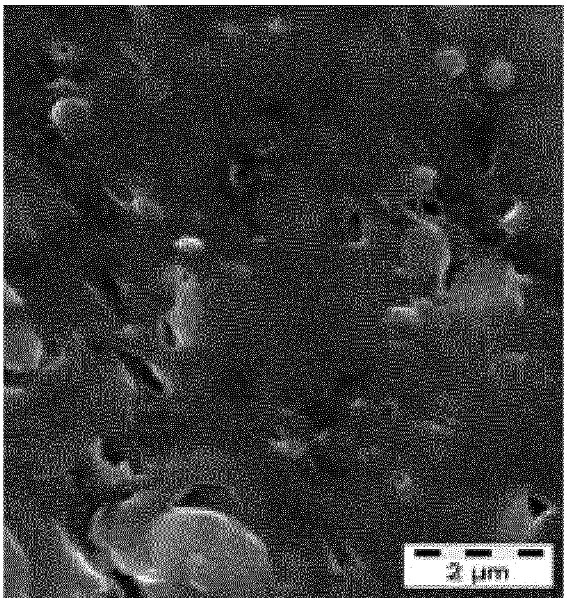


FIG.6

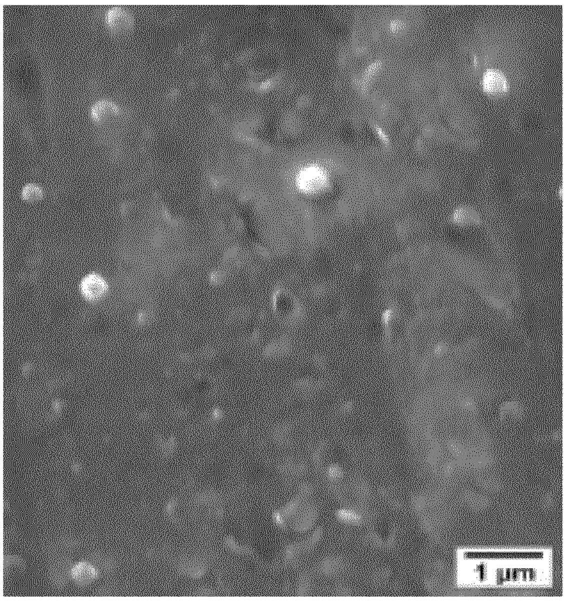


FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2011157727 A2
- WO 2007073500 A2
- WO 2011121078 A1


### Littérature non-brevet citée dans la description


- **R. K. NAGARALE et al.** *MACROMOLECULES,* 2004, vol. 37, 10023-10030
- **XIAOKAI BIAN et al.** *INDUSTRIAL & ENGINEERING CHEMISTRY RESEARCH,* vol. 50, 12113-12123